# EUROPÄISCHE PATENTANMELDUNG

(11) **EP 4 825 528 A1**
(43) Veröffentlichungstag der Anmeldung: **21.10.2026**
(21) Anmeldenummer: 25170875.6
(22) Anmeldetag: 16.04.2025
(51) Int. Cl.: B24B 9/14, B24B 13/00, B24B 27/00, B24B 41/00, B24B 51/00, B29D 11/00

(54) **VORRICHTUNG ZUR BEARBEITUNG VON BRILLENGLASROHLINGEN SOWIE VERFAHREN ZUR BEARBEITUNG VON BRILLENGLASROHLINGEN**

(71) Anmelder: Roland Mandler GmbH & Co. KG, 35452 Heuchelheim (DE)
(72) Erfinder: Mandler, Roland, 35452 Heuchelheim (DE)
(74) Vertreter: Knefel, Cordula

(57) **Zusammenfassung**

Die Erfindung betrifft eine Vorrichtung und ein Verfahren zur Bearbeitung von Brillenglasrohlingen mit wenigstens zwei Werkzeugen, wobei die Vorrichtung mehrere Arbeitsbereiche aufweist, bei der in einem ersten Arbeitsbereich ein um eine erste Achse drehbarer Werkzeughalter mit wenigstens zwei werkzeughaltenden Vorrichtungen für Werkzeuge angeordnet ist, wobei in einem zweiten Arbeitsbereich ein Magazin für wenigstens zwei Werkstückhalter vorgesehen ist, wobei in einem dritten Arbeitsbereich eine Lade- und Entladevorrichtung angeordnet ist, und wobei ein vierter Arbeitsbereich vorgesehen ist, in dem eine Werkstückspindel mit einer Aufnahme für einen Werkstückhalter angeordnet ist, wobei die Werkstückspindel um eine zweite Achse positionierbar ausgebildet ist.

## Beschreibung

Die Erfindung betrifft eine Vorrichtung zur Bearbeitung von Brillenglasrohlingen und ein Verfahren zur Bearbeitung von Brillenglasrohlingen.

Brillengläser werden meist aus kreisrunden Brillenglasrohlingen hergestellt, deren Durchmesser üblicherweise deutlich größer sind als es den Abmessungen des daraus herzustellenden Brillenglases entsprechen würde. Die Ursache hierfür liegt darin, dass die Größe von Brillengläsern divergiert. Bei den Brillenglasrohlingen handelt es sich entweder um Rohteile (beide Seiten ohne optische Wirkung) oder um Halbfertigteile (eine Seite mit optischer Wirkung) aus Kunststoff oder Mineralglas. Die Bearbeitung erfolgt durch spanabhebende Bearbeitung auf Fräs-, Dreh-, Schleif- oder Poliermaschinen.

Zur Bearbeitung müssen die Brillenglasrohlinge an Werkstückaufnahmen der Bearbeitungsmaschinen festgespannt werden. Damit außer der zentralen Bearbeitungsfläche auch der Randbereich für die Bearbeitung zugänglich bleibt, werden die Brillenglasrohlinge bei den aus der Praxis bekannten Bearbeitungsverfahren, je nachdem, welche Seite zu bearbeiten ist, entweder mit der Vorder- oder Rückseite an sogenannten Blockstücken befestigt. Dieser Vorgang wird Aufblocken genannt. Die aufgeblockte Seite ist somit die Aufnahmeseite und verfügt meist bereits über eine optisch wirksame Oberfläche, welche entweder durch mechanische Bearbeitung hergestellt wurde oder an dem Halbfertigteil durch spanlose Formgebungsverfahren bereits ausgebildet ist.

An der Aufnahmeseite verfügen die Blockstücke über eine strukturierte Verbindungsfläche für das Aufblocken. Zum Aufblocken werden das Blockstück und der Brillenglasrohling in einer Vorrichtung so eingespannt, dass zwischen beiden ein Spalt verbleibt. Dieser wird mit einem geschmolzenen Verbindungsmaterial ausgefüllt. Dabei verwendet man Wood'sches Metall, Schwermetall Alloy, UV-aushärtbaren Klebstoff oder andere Materialien, wie zum Beispiel Wachs. Das Verbindungsmaterial haftet nach dem Aushärten an der strukturierten Verbindungsfläche des Blockstücks durch Form- und/oder Haftschluss und an der Aufnahmeseite des Brillenglasrohlings durch Adhäsionskräfte (Klebwirkung), wobei oftmals eine Schutzlackschicht oder eine Schutzfolie auf dem Brillenglasrohling die Klebwirkung unterstützt.

Von Nachteil hierbei ist, dass das Aufblocken zeit- und kostenintensiv ist. Außerdem entstehen pro aufgeblocktem Brillenglasrohling mit Schwermetall circa zwei Gramm Schwund bei der Bearbeitung. Dies entspricht einem Umwelteintrag von circa 500 bis 700 Tonnen Schwermetall bei der Fertigung von 500 Millionen Brillengläsern pro Jahr. Bei einer Verwendung von UV-aushärtendem Klebstoff entstehen große Mengen an Kunststoffabfall im Jahr.

Ein anderer Nachteil der Wachs- und Kunststoffblockverfahren ist eine Beeinträchtigung bereits vorhandener optisch wirksamer Oberflächen aufgrund von hohem Wärmeeintrag beim Aufblocken. Weiterhin haben die Blockstücke einen Spannrand in Form einer zylinderförmigen Umfangsfläche, mit dem sie in den Spannwerkzeugen der Bearbeitungsmaschinen festgespannt werden. Nach dem Aufblocken wird das Blockstück mit dem daran befestigten Brillenglasrohling in oder an einer Bearbeitungsmaschine befestigt.

Aus dem Stand der Technik (US 12,059,768 B2) ist ein Linsenhalter bekannt, der während der gesamten Fertigung des Brillenglases fest mit diesem verbunden ist. Das Befestigen geschieht am Anfang der Fertigung, das Ablösen am Ende der Bearbeitung. Um eine industrielle Fertigung auf Basis dieses Transferhaltekonzeptes durchzuführen, sind viele hunderte sehr teure Halter notwendig. In einer automatischen Fertigung sind pro Zelle circa 1.000 bis 2.000 Vakuumhalter je nach Fertigungsgröße notwendig. Diese Kosten sind nicht unerheblich. Außerdem muss bei der Herstellung der Halter im Vorfeld eine Festlegung der Frontkurven der Brillenglasrohlinge erfolgen. Eine spätere Änderung der Frontkurven hätte sehr hohe Kosten zur Folge. Das heißt, diese zum Stand der Technik gehörenden Blockstücke sind sehr unflexibel und kostenintensiv.

Darüber hinaus gehören zum Stand der Technik (EP 2 631 033 A2) eine Vorrichtung und ein Verfahren, die eine blockstückfreie Fertigung von Brillengläsern ermöglichen. Gemäß diesem Stand der Technik ist eine Werkstückspindel für jede Frontkurve vorgesehen. Diese Vorrichtung weist sechs Aufnahmen für sechs Frontkurven auf. Diese zum Stand der Technik gehörende Vorrichtung weist den Nachteil auf, dass die Maschinenkonstruktion sehr aufwendig und kostenintensiv ist. Durch das Vorsehen von einer spezifischen und teuren Werkstückspindel für jede vorhandene Frontkurve, die gespannt werden muss, ist zum einen die Anzahl der möglichen Frontkurven der Brillengläser, die für eine Rezeptfertigung eingesetzt werden können, begrenzt. Zum anderen sind die Kosten enorm hoch, da diese Werkstückspindeln preislich im fünfstelligen Eurobereich liegen. Das bedeutet, dass bei Verwendung von fünf bis sechs unterschiedlichen Frontkurven, welches eine enorme Beschränkung bedeutet, die Kosten alleine für die Werkstückspindeln im sechsstelligen Eurobereich liegen.

Darüber hinaus gehört zum Stand der Technik (DE 10 2021 004 831 A1) ein Verfahren zur spanenden Bearbeitung von optischen Werkstücken, insbesondere Brillenlinsen aus Kunststoff. Gemäß diesem Stand der Technik wird der Brillenlinsenrohling, auch "Blank" genannt, derart bearbeitet, dass der Brillenlinsenrohling blockstückfrei für die Bearbeitung eingespannt wird. Es wird eine Nut oder eine Stufe oder ein Einstich auf der Frontseite des Rohlings umlaufend ausgebildet. Anschließend erfolgt ein Umspannen des Rohlings, so dass die Bearbeitung der Rückseite möglich ist. Bei dem Abtragen des Halbzeugs zur Erzielung der vorbestimmten Flächengeometrie kommt es zu einer vollständigen Trennung des Halbzeugs vom überschüssigen, radial äußeren Material des Rohlings. Dieses zum Stand der Technik gehörende Verfahren verwendet eine Werkstückaufnahme, die zum Beispiel mittels Vakuum den Rohling oder das Halbzeug fixiert. Dieses Verfahren ist sehr aufwendig, da der Rohling einmal umgespannt werden muss zur Bearbeitung der Rückseite nach der Bearbeitung der Frontseite.

Bei den aus der Praxis bekannten Werkstückhaltern unterscheidet man in Abhängigkeit der Haltemethode bei Glaswerkstückhaltern folgende Befestigungsarten:
- Alloy Befestigung,
- Befestigung mit einem UV-Kleber,
- Befestigung über Adhäsionsfolien,
- Befestigung über Vakuumhalterungen,
- Befestigung über thermische Kleber oder Wachs.

Diese in der Praxis eingesetzten Haltetechnologien, mit Ausnahme der Befestigung über Adhäsionsfolie beziehungsweise über eine Vakuumbefestigung, sind sehr stark umweltbelastend. Die Befestigung über Alloy (Wood'sches Metall) wurde schon oben erläutert.

Das Halten der Brillenglasrohlinge mit UV-aushärtendem oder thermischem Klebematerial ist zwar weniger toxisch als die Alloy-Blockung, hat aber ebenfalls einen sehr negativen Einfluss auf die Umwelt, da eine enorme Menge an Plastikmüll entsteht. Die UV-Halter sowie die Kleber müssen entsorgt werden.

Die Methode mit der Adhäsionsfolie zeigt das Verfahren mit den geringsten Umweltproblemen bei sehr guten Ergebnissen. Diese konnte aber bisher aus technologischen Gründen industriell in einer automatischen Fertigung nicht eingesetzt werden.

Das der Erfindung zugrunde liegende technische Problem besteht darin, eine Vorrichtung und ein Verfahren zur Bearbeitung von Brillenglasrohlingen anzugeben, bei dem die genannten Nachteile nicht auftreten und die eine schnelle und kostengünstige Fertigung von Brillengläsern ermöglichen, deren optische Oberflächen eine hohe Qualität aufweisen und deren Dicke minimiert ist. Darüber hinaus soll eine Vorrichtung angegeben werden, die preiswert aufgebaut ist.

Dieses technische Problem wird durch eine Vorrichtung mit den Merkmalen gemäß Anspruch 1 sowie durch ein Verfahren mit den Merkmalen gemäß Anspruch 11 gelöst.

Die erfindungsgemäße Vorrichtung zur Bearbeitung von Brillenglasrohlingen mit wenigstens zwei Werkzeugen für die Bearbeitung der Brillenglasrohlinge, wobei die Vorrichtung mehrere Arbeitsbereiche aufweist, wobei in einem Arbeitsbereich eine Ladevorrichtung für die Brillenglasrohlinge und eine Entladevorrichtung für die aus den Brillenglasrohlingen hergestellten Brillengläser angeordnet ist, zeichnet sich dadurch aus,
- dass in einem ersten Arbeitsbereich ein um eine erste Achse drehbarer Werkzeughalter mit wenigstens zwei werkzeughaltenden Vorrichtungen für die Werkzeuge angeordnet ist,
- dass in einem zweiten Arbeitsbereich ein Magazin für wenigstens zwei Werkstückhalter vorgesehen ist,
- dass in einem dritten Arbeitsbereich die Lade- und Entladevorrichtung angeordnet ist, und
- dass ein vierter Arbeitsbereich vorgesehen ist, in dem eine Werkstückspindel mit einer Aufnahme für einen Werkstückhalter angeordnet ist, wobei die Werkstückspindel um eine zweite Achse positionierbar ausgebildet ist.

Die erfindungsgemäße Vorrichtung weist den Vorteil auf, dass eine preiswerte Bearbeitung von standardisierten Brillenglasrohlingen mit der Vorrichtung möglich ist.

Die Vorrichtung weist mehrere Arbeitsbereiche auf, wobei ein erster Arbeitsbereich einen Werkzeughalter mit wenigstens zwei werkzeughaltenden Vorrichtungen für die Werkzeuge aufweist. Der Werkzeughalter ist drehbar ausgebildet, so dass die verschiedenen Werkzeuge in Richtung einer Werkstückspindel ausgerichtet werden können.

In einem zweiten Arbeitsbereich ist ein Magazin für wenigstens zwei Werkstückhalter vorgesehen. Vorteilhaft sind vier bis zwölf Werkstückhalter vorgesehen. Es können jedoch auch mehr oder weniger Werkstückhalter vorgesehen sein.

Das Magazin ist vorteilhaft als Magazinteller, vorzugsweise als runder Magazinteller ausgebildet. Das Magazin kann jedoch auch als längliches Magazin, beispielsweise als Bank zur Aufnahme von Werkstückhaltern ausgebildet sein. Das längliche Magazin ist vorteilhaft linear verschiebbar ausgebildet. Ein längliches Magazin hat den Vorteil, dass die Anzahl der Plätze für Werkstückhalter unbeschränkt ist. Ein runder Magazinteller weist den Vorteil auf, dass er eine einfache zentrale Lagerung zum Drehen und Verfahren aufweisen kann.

In einem dritten Arbeitsbereich ist die Lade- und Entladevorrichtung angeordnet, mit der die Brillenglasrohlinge von einer Transportvorrichtung in einem Werkstückhalter angeordnet werden können, und mit der bearbeitete Brillengläser wieder der Transportvorrichtung zugeführt werden können.

In einem vierten Arbeitsbereich ist eine Werkstückspindel mit einer Aufnahme für einen Werkstückhalter angeordnet, wobei die Werkstückspindel um eine zweite Achse positionierbar ausgebildet ist. In der Aufnahme kann ein zu einem Brillenglasrohling passender Werkstückhalter angeordnet werden.

Die Herstellung von Brillengläsern mit mechanischer Bearbeitungstechnologie erfolgt vorteilhaft unter Verwendung von Brillenglasrohlingen, die scheibenförmig oder meniskusförmig ausgeführt sind. Der Rohdurchmesser beträgt üblicherweise 65 mm bis 85 mm und die Dicke circa 10 mm bis 12 mm. Die konvexförmige Frontkurve ist üblicherweise schon final fertig und wird als Rezeptbasis für die Herstellung der zweiten Fläche auf der Konkavseite des Brillenglases sowohl für die Befestigung während der Bearbeitung als auch für die mathematische Berechnung des Brillenglasrezeptes verwendet.

Grundsätzlich sollte die Auswahl des Rohlingtyps anhand eines Rezeptes erfolgen. Unter einem Rezept ist neben der Dokumentation durch einen Arzt oder Optiker jegliche Information über einen Sehfehler anzusehen. Der Sehfehler kann dabei auch ein standardisierter Sehfehler für eine (Klein-) Serienproduktion sein. Unter Umständen ist jedoch auch die Fassung eines gewünschten Brillengestells ausschlaggebend bei der Auswahl des Rohlingtyps.

Durch die Kombination der konvexen Frontseite in Verbindung mit der konkaven Rückseite entsteht die sogenannte Rezeptwirkung des Brillenglases. Diese Wirkung wird in Dioptrien dargestellt. Es kann sich hierbei um eine rein sphärische Plus- oder Minuswirkung handeln, aber auch um eine astigmatische oder auch eine progressive beziehungsweise bifokale Wirkung. Eine Kombination dieser Eigenschaften ist ebenfalls möglich. In der modernen Fertigung von heute spricht man von einer Freiformfläche auf der Innenseite und auch von einem Freiformbrillenglas. Sämtliche medizinisch notwendigen Augenkorrekturen können dadurch heute in einer sehr hohen Genauigkeit durch diese Freiformbrillengläser umgesetzt werden.

Mit den Werkstückhaltern, die in dem Magazin der erfindungsgemäßen Vorrichtung angeordnet sind, ist es möglich, Brillenglasrohlinge mit unterschiedlichen Oberflächenkrümmungen aufzunehmen. Ein aufgenommener Brillenglasrohling wird so während einer Bearbeitung der Oberfläche stets aus Richtung der nicht zu bearbeitenden Aufnahmeseite durch die Werkstückhalteraufnahmefläche gestützt. Entsprechend präzise kann die zu bearbeitende Oberflächengeometrie gefertigt werden. Trotz der unterschiedlichen Oberflächenkrümmungen lässt sich die Dicke von gefertigten Brillengläsern minimieren.

Weiterer Vorteil der erfindungsgemäßen Vorrichtung ist, dass die Werkstückaufnahme unmittelbar in der Vorrichtung erfolgt und nicht wie beim Aufblocken durch vorgelagerte und teilweise manuelle Arbeitsschritte. Entsprechend ist die Bearbeitungsgeschwindigkeit hoch. Die Werkstückaufnahmen liegen in dem Magazin bereit. Die Werkstückspindel nimmt den Werkstückhalter auf, der für die Bearbeitung des jeweiligen Brillenglasrohlings erforderlich ist. Dieser Prozess kann vorteilhaft automatisiert durchgeführt werden, um die Bearbeitungszeit zu verkürzen.

Weiterer Vorteil der erfindungsgemäßen Vorrichtung mit dem Magazin für die wenigstens zwei Werkstückhalter ist, dass gegenüber dem Stand der Technik, bei dem beispielsweise lediglich sechs Werkstückhaltevorrichtungen an einem Werkstückrevolver angeordnet sind, auch mehr unterschiedliche Werkstückhalter in dem Magazin angeordnet werden können und zur Verfügung stehen. Damit ist die erfindungsgemäße Vorrichtung vielseitiger anwendbar, nämlich für eine grö-ßere Anzahl von Brillenglasrohlingen mit unterschiedlichen Frontseiten.

Die erfindungsgemäße Vorrichtung weist in einem dritten Arbeitsbereich die Lade- und Entladevorrichtung auf. Ist an der Werkstückspindel der für den nächsten Brillenglasrohling passende Werkstückhalter angeordnet, wird in der Lade- und Entladestation der Brillenglasrohling vorzugsweise automatisch einer Transportvorrichtung entnommen und an dem Werkstückhalter angeordnet. Der Brillenglasrohling ist für den Zeitraum der Bearbeitung an der Werkstückspindel über den Werkstückhalter befestigt.

Die erfindungsgemäße Vorrichtung weist darüber hinaus einen vierten Arbeitsbereich auf, in dem die Werkstückspindel mit einer Aufnahme für den Werkstückhalter angeordnet ist. Die Werkstückspindel ist um eine zweite Achse positionierbar ausgebildet. Die Werkstückspindel kann mit der Aufnahme für den Werkstückhalter in dem zweiten Arbeitsbereich angeordnet werden, um einen Werkstückhalter aus dem Magazin zu entnehmen oder dort abzulegen. Sie kann in dem dritten Arbeitsbereich für die Beladung oder Entladung mit dem Werkstückhalter angeordnet werden. Darüber hinaus kann sie mit dem Werkstückhalter und dem daran angeordneten Brillenglasrohling in dem ersten Arbeitsbereich angeordnet werden, damit eine mechanische Bearbeitung des Brillenglasrohlings erfolgt.

Besonders vorteilhaft läuft das gesamte Verfahren automatisiert ab.

Dadurch, dass an dem drehbaren Werkzeughalter wenigstens zwei Werkzeuge in den werkzeughaltenden Vorrichtungen angeordnet werden können, ist es möglich, den Brillenglasrohling mit unterschiedlichen Werkzeugen zu bearbeiten.

Besonders vorteilhaft sind zwei werkzeughaltende Vorrichtungen vorgesehen. Es besteht jedoch auch die Möglichkeit, mehr als zwei werkzeughaltende Vorrichtungen in dem Werkzeughalter anzuordnen.

Der Vorteil der erfindungsgemäßen Vorrichtung ist darin zu sehen, dass einerseits eine blockstückfreie Bearbeitung der Brillenglasrohlinge möglich ist, dass andererseits jedoch mehr als sechs unterschiedliche Werkstückaufnahmeflächen für die Brillenglasrohlinge zur Verfügung stehen, so dass mehr als sechs unterschiedliche Rohlingtypen aufgenommen werden können.

Ein weiterer Vorteil der erfindungsgemäßen Vorrichtung liegt darin, dass die Arbeitsgänge für die Fertigung der Rezeptgläser deutlich reduziert werden.

Dadurch, dass für jeden Brillenglasrohlingtyp ein angepasster Werkstückhalter in dem Magazin der Vorrichtung zur Verfügung steht, ist während der Bearbeitung der Brillengläser eine optimale Abstützung vorhanden. Eine thermisch ausgelöste mechanische Spannung durch die Befestigungsmethode tritt nicht auf.

Mit der erfindungsgemäßen Vorrichtung ist sowohl eine kostengünstige Fertigung als auch die Möglichkeit eines stabil abgestützten Brillenglasrohlings und damit eine hochgenaue Fertigungsmethode für Brillengläser möglich.

Mit der erfindungsgemäßen Vorrichtung kann eine vollautomatische Fertigung mit einer minimalen Anzahl von Fertigungsschritten durchgeführt werden.

Gemäß einer vorteilhaften Ausführungsform der Erfindung sind die erste Achse und die zweite Achse senkrecht zueinander ausgerichtet. Der Werkzeughalter ist um die erste Achse drehbar, um die wenigstens zwei werkzeughaltenden Vorrichtungen in Richtung der Werkstückspindel ausrichten zu können, je nachdem, mit welchem Werkzeug eine Bearbeitung erfolgen soll. Die zweite Achse ist die Achse, um die die Werkstückspindel drehbar und positionierbar ist. Die Werkstückspindel dreht sich um die zweite Achse, um die Aufnahme für den Werkstückhalter und gegebenenfalls den daran angeordneten Werkstückhalter in dem Bereich des Magazins anzuordnen und den Werkstückhalter in dem Bereich der Lade- und Entladestation oder in dem Bereich der Werkzeuge zu positionieren.

Gemäß einer weiteren vorteilhaften Ausführungsform der Erfindung ist vorgesehen, dass die Werkstückspindel in Richtung des ersten oder des zweiten oder des dritten Arbeitsbereiches um die zweite Achse positionierbar ausgebildet ist. Hierdurch ist es möglich, Werkstückhalter aus dem Magazin aufzunehmen oder dort abzulegen. Es ist auch möglich, Brillenglasrohlinge, welche unbearbeitet sind, in dem Werkstückhalter aufzunehmen oder die bearbeiteten Brillenglasrohlinge zu entladen. Darüber hinaus ist es möglich, die Brillenglasrohlinge durch die wenigstens zwei Werkzeuge zu bearbeiten.

Gemäß einer weiteren vorteilhaften Ausführungsform der Erfindung ist vorgesehen, dass die Werkstückspindel zusätzlich um eine Spindelachse rotatorisch angetrieben ausgebildet ist. Damit müssen nicht alle Fertigungsbewegungen durch etwaige Werkzeuge durchgeführt werden. Vielmehr reichen auch Zustellbewegungen, zum Beispiel von einem Drehmeißel. Zudem stabilisiert sich die Lage des aufgenommenen Brillenglasrohlings durch die Rotation, was zu einer hohen Oberflächenqualität bei der Bearbeitung führt.

Gemäß einer weiteren vorteilhaften Ausführungsform der Erfindung ist vorgesehen, dass der erste und der zweite und der dritte Arbeitsbereich radial zur zweiten Achse der Werkstückspindel angeordnet sind. Diese Ausführungsform weist den Vorteil auf, dass die Aufnahme der Werkstückspindel für den Werkzeughalter in jedem Arbeitsbereich positionierbar ist. Die Aufnahme der Werkstückspindel für die Werkstückhalter kann in dem zweiten Arbeitsbereich angeordnet werden, um einen Werkstückhalter aus dem Magazin aufzunehmen oder dort abzulegen. Der aufgenommene Werkstückhalter kann in dem dritten Arbeitsbereich der Lade- und Entladestation für die Brillenglasrohlinge angeordnet werden und der Werkstückhalter mit dem Brillenglasrohling kann in dem ersten Arbeitsbereich für die Bearbeitung mit den wenigstens zwei Werkzeugen positioniert werden.

Gemäß einer besonders bevorzugten Ausführungsform der Erfindung ist vorgesehen, dass in den werkzeughaltenden Vorrichtungen ein Fräswerkzeug und ein wenigstens einen Drehmeißel aufweisendes Drehwerkzeug zur Bearbeitung einer Oberfläche der Brillenglasrohlinge angeordnet ist.

In einem ersten Arbeitsschritt wird vorteilhaft ein Fräsvorgang vorgenommen. Besonders vorteilhaft ist ein Kugelfräser vorgesehen, mit dem eine schnelle Grobbearbeitung des Brillenglasrohlings durchgeführt werden kann. Hierzu kann das Fräswerkzeug beispielsweise ein Außenumfangsprogramm zur Bearbeitung der äußeren radialen Kontur des Brillenglasrohlings aufweisen. Zusätzlich kann ein Oberflächenbearbeitungsprogramm für die optische Oberfläche eine erhebliche Zeiteinsparung bewirken. Schließlich kann das Fräswerkzeug ein Orientierungsnutprogramm umfassen, um den Brillenglasrohling für spätere Arbeitsschritte mit einer Ausrichtungsmarkierung zu versehen.

Geeignet für derartige Bearbeitungsschritte sind vor allem Kugelfräser, deren Durchmesser senkrecht zur Frässpindel gleich groß oder ähnlich groß ist, wie dessen Erstreckung in Richtung der Frässpindel. Insbesondere Kugelfräser mit einem Durchmesser von 20 mm bis 60 mm sind vorteilhaft. Aber auch andere Durchmesser sind geeignet.

Die Frässpindel dreht sich beispielsweise mit 30.000 Umdrehungen pro Minute. Andere Umdrehungszahlen sind ebenfalls möglich.

Sofern Anforderungen bestehen, die nicht allein durch den genannten Kugelfräser erfüllt werden können, ist eine Ergänzung möglich derart, dass das Fräswerkzeug einen Werkzeugrevolver mit wenigstens einem weiteren vom ersten Kugelfräser abweichenden zweiten Fräser umfasst.

Es besteht auch die Möglichkeit, auf dem Werkzeughalter ein weiteres Fräswerkzeug anzuordnen, so dass auf dem Werkzeughalter beispielsweise zwei Fräswerkzeuge und ein Drehwerkzeug angeordnet sind.

Damit kann je nach Anforderung ein geeigneter Fräser ausgewählt werden. Ein manueller Werkzeugwechsel ist nicht notwendig.

Darüber hinaus ist gemäß der Erfindung vorteilhaft vorgesehen, ein Drehwerkzeug auf dem Werkzeughalter anzuordnen. Das Drehwerkzeug mit beispielsweise zustellbarem Drehmeißel dient dazu, besonders feine Strukturen der zu bearbeitenden optischen Oberfläche herzustellen. Hierzu weist das Drehwerkzeug vorteilhaft ein Oberflächenprogramm auf. Die notwendigen Drehbewegungen des Brillenglasrohlings können durch Rotation der Werkstückspindel um ihre Spindelachse erfolgen. Da die optischen Oberflächen der Bearbeitungsseite in den meisten Fällen nicht rotationssymmetrisch sind, weist das Drehwerkzeug vorteilhaft einen sogenannten Fast-Tool-Servoantrieb auf. Dies ist ein besonders schneller und präziser Aktuator. Ein solcher kann beispielsweise mit Piezo-Elementen angetrieben sein. Alternativ bieten sich Linearmotoren und Tauchspulenaktuatoren (Voice-Coil-Aktuatoren) an.

Sofern nicht alle Anforderungen von einem einzigen Drehmeißel erfüllt werden können, kann das Drehmeißelwerkzeug mit wenigstens einem vom ersten Drehmeißel abweichenden zweiten Drehmeißel ausgerüstet sein.

Das Drehwerkzeug sollte ferner so gelagert sein, dass es die Winkellage während des Oberflächenprogramms relativ zur Spindelachse der Werkstückspindel gesteuert verändern kann. Somit können Mikrorillen in der Oberfläche verringert werden.

Die Belastung auf die Werkstückspindel und damit etwaige Vibrationen werden am Besten vermieden, wenn das Drehwerkzeug und das Fräswerkzeug gegenüberliegend relativ zur Hauptdrehachse der Werkstückspindel angeordnet sind. Sofern sie hierbei geodätisch horizontal gegenüberliegend angeordnet sind, wird zudem eine gegenseitige Beeinträchtigung durch Kühlmittel und Späne vermieden.

Gemäß einer besonders bevorzugten Ausführungsform der Erfindung ist vorgesehen, dass in dem ersten Arbeitsbereich das Fräswerkzeug mit einem um eine Frässpindel drehbaren und zustellbaren Kugelfräser anordbar ist oder dass in dem ersten Arbeitsbereich das den wenigstens einen Drehmeißel aufweisende Drehwerkzeug anordbar ist.

Diese Ausführungsform weist den Vorteil auf, dass eine Grobbearbeitung mit dem Fräswerkzeug und die Feinbearbeitung mit dem Drehwerkzeug in einem einzigen Arbeitsbereich durchführbar ist.

Gemäß einer weiteren vorteilhaften Ausführungsform der Erfindung ist vorgesehen, dass in dem dritten Arbeitsbereich die Ladevorrichtung zum Laden der Brillenglasrohlinge und die Entladevorrichtung zum Entladen der aus den bearbeiteten Brillenglasrohlingen hergestellten Brillengläser angeordnet ist und dass die Ladevorrichtung und die Entladevorrichtung eine einzige Vorrichtung ist. Das Beladen und Entladen kann mit ein und derselben Vorrichtung durchgeführt werden.

Vorteilhaft werden die Brillenglasrohlinge über eine Transportvorrichtung, die beispielsweise Transportkästen aufweist, zugeführt. Die bearbeiteten Brillenglasrohlinge werden wiederum der Transportvorrichtung, beispielsweise den Transportkästen zugeführt. In der erfindungsgemäßen Vorrichtung werden die Brillenglasrohlinge bearbeitet.

In der vorliegenden Anmeldung werden die bearbeiteten Brillenglasrohlinge als Brillengläser bezeichnet. Diese Brillengläser müssen jedoch noch nicht final bearbeitet sein. Eine weitere Nachbearbeitung, beispielsweise ein Polieren oder ein Beschichten oder ein Abtrennen eines überstehenden Randes oder dergleichen kann vorteilhaft noch anschließend durchgeführt werden.

Gemäß einer weiteren vorteilten Ausführungsform der Erfindung ist vorgesehen, dass der in dem ersten Arbeitsbereich angeordnete um eine erste Achse drehbare Werkzeughalter linear verschiebbar ausgebildet ist. Der Werkzeughalter ist vorteilhaft in Richtung der Werkstückspindel linear verschiebbar ausgebildet.

Diese lineare Verschiebbarkeit ist vorteilhaft, um ein automatisiertes Bearbeiten der Brillenglasrohlinge zu ermöglichen. Der Werkzeughalter wird um eine erste Achse gedreht, um das Werkzeug auf dem Werkzeughalter auszuwählen. Anschließend wird der Werkzeughalter linear verschoben, damit das an dem Werkzeughalter angeordnete Werkzeug in Kontakt mit dem Brillenglasrohling während der Bearbeitung kommen kann. Ist ein Bearbeitungsvorgang, beispielsweise der Fräsvorgang, abgeschlossen, wird der Werkzeughalter vorteilhaft wiederum linear verschoben, so dass das Werkzeug nicht mehr in Kontakt mit dem Brillenglasrohling kommt. Der Werkzeughalter wird vorteilhaft um die erste Achse gedreht, so dass vorteilhaft das zweite Werkzeug, beispielsweise das Drehwerkzeug, in Richtung der Werkstückspindel ausgerichtet wird. Anschließend wird der Werkzeughalter vorteilhaft wieder linear verschoben, so dass mit dem Drehwerkzeug eine Bearbeitung des Brillenglasrohlings möglich ist.

Gemäß einer weiteren vorteilhaften Ausführungsform der Erfindung ist vorgesehen, dass die Werkstückspindel mit der Aufnahme für den Werkstückhalter senkrecht zu ihrer Längsachse und in Richtung der zweiten Achse linear verschiebbar ausgebildet ist.

Diese lineare Verfahrachse der Werkstückspindel erlaubt ein optimales Bearbeiten des Brillenglasrohlings. Diese lineare Achse der Werkstückspindel, die auch als Querachse bezeichnet werden kann, ist identisch mit der zweiten Achse oder parallel zu der zweiten Achse, um die die Werkstückspindel drehbar ist.

Gemäß einer vorteilhaften Ausführungsform der Erfindung ist das Magazin mit den wenigstens zwei Werkstückhaltern um 0 bis 360 Grad dreh- und positionierbar. Das Magazin ist vorteilhaft motorisch angetrieben und dreht sich um eine dritte Achse. Das Magazin ist darüber hinaus entlang der dritten Achse linear verschiebbar. Das Magazin wird vorteilhaft in Richtung dieser Linearachse bewegt und positioniert, damit Werkstückhalter entnommen oder abgelegt werden können.

Die Transportvorrichtung für die Brillenglasrohlinge und die Brillengläser weist vorteilhaft Transportkästen auf, in denen die Brillenglasrohlinge oder die Brillengläser angeordnet sind.

Vorteilhaft ist darüber hinaus ein Ladesystem vorgesehen, welches vorteilhaft als Roboter oder kollaborativer Roboter oder auch Cobot ausgebildet ist. Bei einem Cobot handelt es sich um einen Industrieroboter, der beispielsweise im Produktionsprozess nicht durch Schutzeinrichtungen von Bedienpersonen getrennt ist.

Gemäß einer weiteren vorteilhaften Ausführungsform der Vorrichtung ist die erfindungsgemäße Vorrichtung mit einer Verkleidung versehen, die zum einen als Spritzschutz dient und zum anderen eine Sicherheitsfunktion erfüllen kann.

Gemäß einer weiteren vorteilhaften Ausführungsform der Erfindung ist eine Basiseinheit vorgesehen, auf der der Werkzeughalter sowie eine Lagerung der Werkstückspindel als auch die Lagerung des Magazins angeordnet sind. Auf oder an der Basiseinheit ist darüber hinaus vorteilhaft die Transportvorrichtung angeordnet. Zusätzlich kann vorteilhaft die Ladevorrichtung an der Basiseinheit angeordnet sein.

Die Basiseinheit besteht vorteilhaft aus Polymerbeton, Granit und/oder Grauguss, der mit Kernsand gefüllt ist. Vorteilhaft ist die Basiseinheit schwingungsisoliert und besonders vorteilhaft mittels einer Modalanalyse optimiert.

Das erfindungsgemäße Verfahren zur Bearbeitung von Brillenglasrohlingen mit der erfindungsgemäßen Vorrichtung, wobei mindestens zwei Brillenglasrohlingtypen mit unterschiedlichen aufnahmeseitigen Oberflächenkrümmungen auswählbar sind, zeichnet sich dadurch aus,
- dass die Werkstückspindel mit der Aufnahme für den Werkstückhalter im zweiten Arbeitsbereich positioniert wird,
- dass in dem zweiten Arbeitsbereich ein zu dem Brillenglasrohling passender Werkstückhalter aus dem Magazin an der Aufnahme an der Werkstückspindel angeordnet wird,
- dass die Werkstückspindel mit der Aufnahme für den Werkstückhalter und mit dem an der Aufnahme angeordneten Werkstückhalter in dem dritten Arbeitsbereich positioniert wird,
- dass ein Brillenglasrohling im dritten Arbeitsbereich mit der Ladevorrichtung einer Transportvorrichtung entnommen und in oder an dem Werkstückhalter angeordnet und fixiert wird,
- dass die Werkstückspindel mit der Aufnahme für den Werkstückhalter und dem daran angeordneten Werkstückhalter und dem in oder an dem Werkstückhalter angeordneten Brillenglasrohling in dem ersten Arbeitsbereich positioniert wird,
- dass der Werkzeughalter das erste Werkzeug in Richtung der Werkstückspindel ausrichtet,
- dass der Brillenglasrohling mit dem ersten Werkzeug bearbeitet wird,
- dass der Werkzeughalter das zweite Werkzeug in Richtung der Werkstückspindel ausrichtet,
- dass der Brillenglasrohling mit dem zweiten Werkzeug bearbeitet wird,
- dass die Werkstückspindel mit dem Werkstückhalter und dem in oder an dem Werkstückhalter angeordneten, aus dem bearbeiteten Brillenglasrohling hergestellten Brillenglas in dem dritten Arbeitsbereich positioniert wird,
- dass das aus dem bearbeiteten Brillenglasrohling hergestellte Brillenglas mittels der Entladevorrichtung dem Werkstückhalter entnommen und in der Transportvorrichtung abgelegt wird.

Das erfindungsgemäße Verfahren weist den Vorteil auf, dass in einem vorteilhaft vollautomatischen Verfahren ein Brillenglasrohling einer Transportvorrichtung entnommen werden kann, dass für eine Vielzahl von Brillenglasrohlingtypen Werkstückhalter aus einem Magazin auswählbar und an einer Werkstückspindel anordbar sind, dass der Brillenglasrohling mit wenigstens zwei Werkzeugen bearbeitet wird, dass der bearbeitete Brillenglasrohling, das heißt, das aus dem Brillenglasrohling hergestellte Brillenglas, welches noch weiteren Bearbeitungsschritten unterzogen werden kann, wieder in der Transportvorrichtung abgelegt wird.

Das erfindungsgemäße Verfahren weist darüber hinaus den Vorteil auf, dass es vollautomatisiert durchgeführt werden kann und dass für verschiedene Brillenglasrohlingtypen jeweils passende Werkzeughalter verfügbar sind, die in dem Magazin bevorratet werden, wobei die Anzahl der Werkzeughalter lediglich durch die Anzahl der Plätze im Magazin beschränkt sind. Hierdurch ist eine optimierte Bearbeitung der Brillenglasrohlinge möglich, da eine optimale Lagerung der Brillenglasrohlinge während der Bearbeitung erfolgt durch die angepassten Werkstückhalter.

Gemäß dem erfindungsgemäßen Verfahren wird der Brillenglasrohling mit wenigstens zwei Werkzeugen bearbeitet.

Gemäß einer weiteren vorteilhaften Ausführungsform der Erfindung ist vorgesehen, dass als letzter Schritt die Werkstückspindel mit dem Werkstückhalter in dem zweiten Arbeitsbereich positioniert wird und der Werkstückhalter in dem Magazin abgelegt wird.

Dieser Verfahrensschritt ist lediglich optional. Weist der nächste zu bearbeitende Brillenglasrohling eine Vorderseite mit derselben Krümmung auf wie der vorhergehende Brillenglasrohling, muss der Werkstückhalter nicht im Magazin abgelegt und wieder neu aufgenommen werden, sondern der Werkstückhalter kann an der Werkstückspindel verbleiben.

Gemäß einer weiteren vorteilhaften Ausführungsform der Erfindung ist vorgesehen, dass zwischen dem Bearbeiten des Brillenglasrohlings mit dem ersten Werkzeug und dem Bearbeiten mit dem zweiten Werkzeug wenigstens eine weitere Bearbeitung mit wenigstens einem weiteren Werkzeug durchgeführt wird und/oder dass nach dem Bearbeiten mit dem zweiten Werkzeug wenigstens eine weitere Bearbeitung mit wenigstens einem weiteren abweichenden Werkzeug durchgeführt wird.

Gemäß einer besonders vorteilhaften Ausführungsform der Erfindung ist das erste Werkzeug als ein Fräswerkzeug und das zweite oder ein weiteres Werkzeug als ein den wenigstens einen Drehmeißel aufweisendes Drehwerkzeug ausgebildet.

Mit dem Fräswerkzeug wird eine Grobbearbeitung durchgeführt und mit dem Drehwerkzeug, welches wenigstens einen Drehmeißel trägt, wird eine Feinbearbeitung durchgeführt.

Es besteht die Möglichkeit, nach dem ersten Bearbeitungsvorgang mit dem Fräswerkzeug einen weiteren Fräsvorgang mit einem zweiten Fräswerkzeug durchzuführen.

Es besteht auch die Möglichkeit, die Oberfläche des Brillenglasrohlings mit zwei unterschiedlichen Drehwerkzeugen zu bearbeiten.

Zum Beispiel können zwei Bearbeitungsvorgänge mit zwei unterschiedlichen Fräswerkzeugen und ein Bearbeitungsvorgang mit einem Drehwerkzeug durchgeführt werden. Es besteht auch die Möglichkeit, einen Bearbeitungsvorgang mit einem Fräswerkzeug durchzuführen und zwei Bearbeitungsvorgänge mit Drehwerkzeugen. Andere Alternativen sind ebenfalls möglich.

Gemäß einer weiteren vorteilhaften Ausführungsform der Erfindung ist vorgesehen, dass bei der Fräsbearbeitung eine Spindelachse der Werkstückspindel, eine Linearachse des Werkzeughalters und eine Querachse zu der Längsachse der Werkstückspindel interpolieren.

Die drei Achsen arbeiten während des Fräsvorganges zusammen, um eine gewünschte Grobbearbeitung der Oberfläche des Brillenglasrohlings herstellen zu können.

Die Bearbeitung erfolgt in den meisten Fällen in einer Spezialbewegung um die Spindelachse der Werkstückspindel vom Rand zur Mitte des Brillenglasrohlings. Es sind jedoch auch andere Kinematiken möglich.

Gemäß einer weiteren vorteilhaften Ausführungsform des erfindungsgemäßen Verfahrens ist vorgesehen, dass das wenigstens eine Werkzeug auf die Mitte der Werkstückspindel ausgerichtet wird. Hierdurch wird eine hochgenaue Bearbeitung, insbesondere der Brillenglasmitte, ermöglicht, und zwar genau dort, wo das Brillenglas die höchste Genauigkeit aufweisen muss.

Gemäß einer weiteren vorteilhaften Ausführungsform des erfindungsgemäßen Verfahrens ist vorgesehen, dass eine Kombination der Bewegung der Werkstückspindel in Richtung einer Querachse der Werkstückspindel, die senkrecht zur Längsachse der Werkstückspindel angeordnet ist, und der Bewegung des Drehwerkzeuges in linearer Richtung durchgeführt wird für eine Ausrichtung des Drehwerkzeuges auf die Mitte der Werkstückspindel. Durch diese Ausführungsform wird die Feinbearbeitung des Brillenglases über den Drehprozess durchgeführt, der vorteilhaft in Form einer Spezialbahn vom Rand der Linsenkontur bis zur Mitte der Linse durchgeführt wird. Da die Oberfläche des Brillenglases eine nicht rotationsförmige Freiformfläche ist, muss bei jeder Umdrehung der Linse sich das Drehwerkzeug entlang der Linearachse bewegen und erzeugt damit einen Teil der Freiformfläche. Gleichzeitig interpolieren die Achse der Werkstückspindel, die Linearachse des Werkzeuges und die Querachse der Werkstückspindel. Durch die Interpolation wird die hauptsächliche Linearbewegung zur Erzeugung der Freiformfläche erzeugt. Es sind auch andere Bewegungen oder Interpolationen möglich, um Bearbeitungseigenschaften zu optimieren.

Die Kombination der Positionierung der zweiten Achse, um die die Werkstückspindel rotiert, in Verbindung mit der Linearachse des Werkzeughalters, kann eingesetzt werden, um das zweite Werkzeug, beispielsweise den Drehmeißel, perfekt auf die Mitte der Werkstückspindel zu positionieren. Hierdurch wird die Qualität des Brillenglases in der Mitte optimiert.

Weitere Merkmale und Vorteile der Erfindung ergeben sich anhand der zugehörigen Zeichnungen, in denen die erfindungsgemäße Vorrichtung und die Bearbeitung eines Brillenglasrohlings beispielhaft dargestellt sind, ohne die Erfindung auf diese Ausführungsbeispiele zu beschränken. In den Zeichnungen zeigen:
- Fig. 1: eine erfindungsgemäße Vorrichtung in Draufsicht;
- Fig. 2: eine erfindungsgemäße Vorrichtung in Seitenansicht, teilweise geschnitten;
- Fig. 3: die erfindungsgemäße Vorrichtung gemäß Fig. 2 mit zweitem Werkzeug;
- Fig. 4: die Vorrichtung gemäß Fig. 2 mit Werkstückspindel in geänderter Arbeitsposition;
- Fig. 5: die erfindungsgemäße Vorrichtung mit geänderter Arbeitsposition der Werkstückspindel;
- Fig. 6: die erfindungsgemäße Vorrichtung in Draufsicht;
- Fig. 7: einen Brillenglasrohling in Draufsicht;
- Fig. 8: einen Brillenglasrohling im Schnitt während der Grobbearbeitung;
- Fig. 9: einen Brillenglasrohling im Schnitt während der Feinbearbeitung
- Fig. 10: ein Minusglas gemäß der Erfindung im Schnitt;
- Fig. 11: ein Minusglas gemäß dem Stand der Technik im Schnitt;
- Fig. 12: ein Plusglas gemäß dem Stand der Technik im Schnitt;
- Fig. 13: ein Plusglas gemäß dem Stand der Technik im Schnitt;
- Fig. 14: einen Schnitt durch einen Brillenglasrohling als geändertes Ausführungsbeispiel.

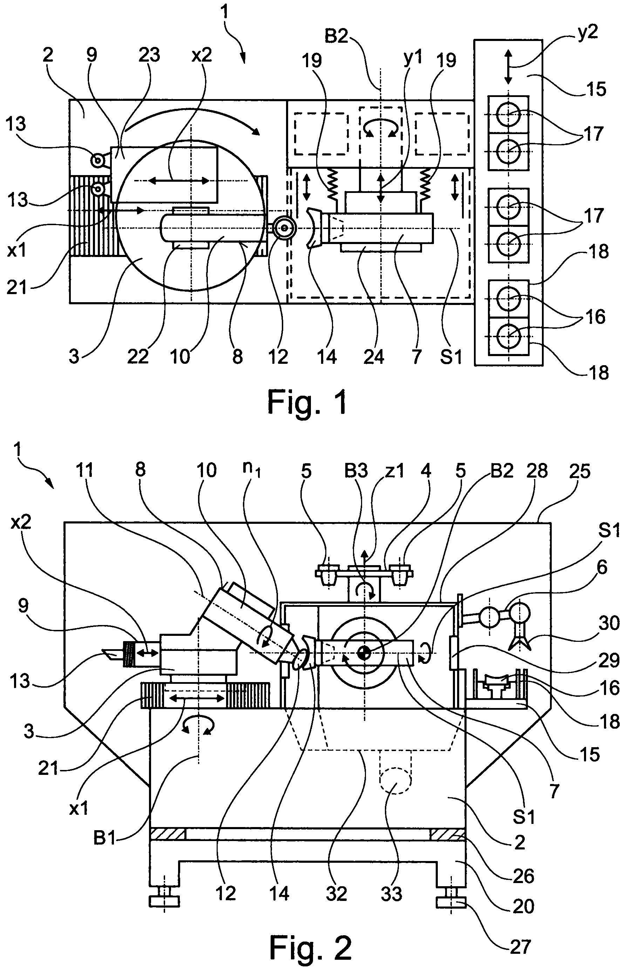

Fig. 1 zeigt eine erfindungsgemäße Vorrichtung 1 zur Bearbeitung von Brillenglasrohlingen. Die Fig. 2 bis 6 zeigen ebenfalls die Vorrichtung 1. Gleiche Teile sind mit gleichen Bezugszeichen versehen.

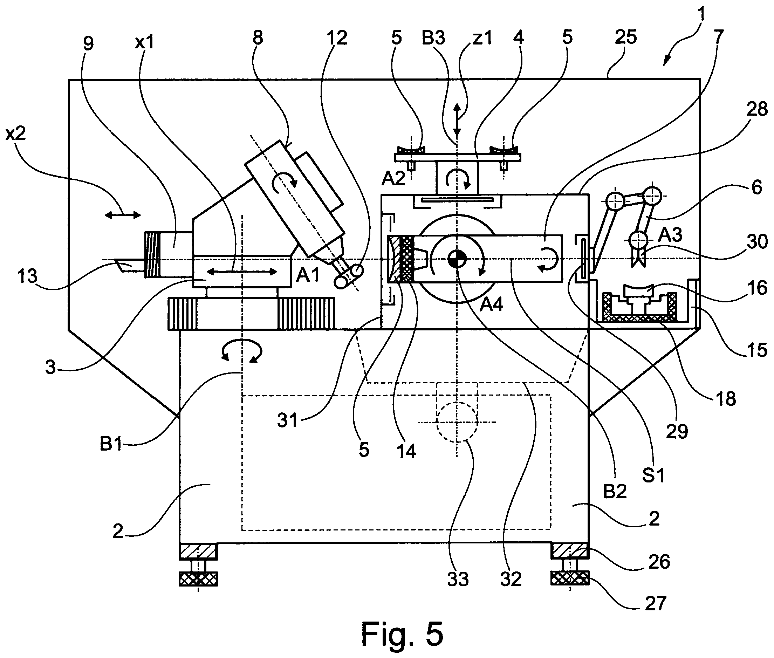

Die Vorrichtung 1 weist eine Basiseinheit 2 auf. Die Vorrichtung 1 weist vier Arbeitsbereiche auf, die in Fig. 5 näher bezeichnet sind. Es handelt sich um einen ersten Arbeitsbereich A1 mit einem Werkzeughalter 3 und um einen zweiten Arbeitsbereich A2 mit einem Magazin 4 für Werkstückhalter 5. In einem dritten Arbeitsbereich A3 ist eine Lade- und Entladevorrichtung 6 angeordnet, die lediglich in den Fig. 2 bis 6 dargestellt ist. In dem vierten Arbeitsbereich A4 ist eine Werkstückspindel 7 angeordnet.

Die Werkstückhalter 5 sind unterschiedlich ausgebildet. Die Werkstückhalter 5 weisen Oberflächen auf, die verschiedenen Brillenglasrohlingtypen angepasst ausgebildet sind.

Der Werkzeughalter 3 ist um eine erste Achse B1 drehbar angeordnet. Die Werkzeugspindel 7 ist um eine zweite Achse B2 drehbar angeordnet.

Der Werkstückhalter 5 ist in verschiedenen Positionen positionierbar durch Drehung um die Achse B1. Der Werkzeughalter kann sich von 0 bis 360 Grad um die Achse B1 drehen.

Die Werkstückspindel 7 dreht sich um die Achse B2. Die Werkstückspindel 7 ist in Richtung der Arbeitsbereiche A1, A2, A3 positionierbar.

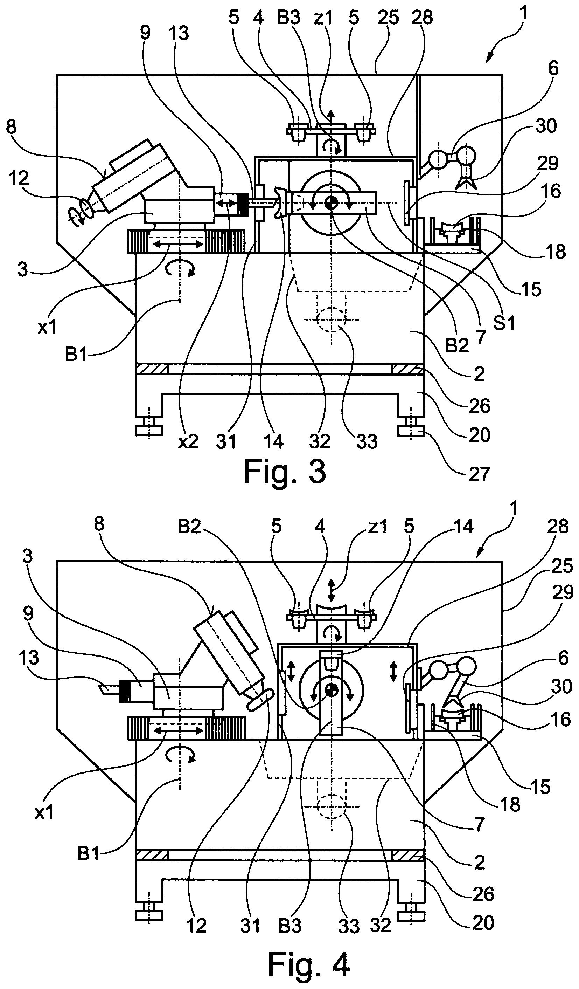

Der Werkzeughalter 3 trägt zwei werkzeughaltende Vorrichtungen 22, 23. An der einen werkzeughaltenden Vorrichtung 22 ist ein Fräswerkzeug 8 und an der anderen werkzeughaltenden Vorrichtung 23 ist ein Drehwerkzeug 9 angeordnet. Das Fräswerkzeug 8 weist eine Frässpindel 10 auf, die mit einer Drehzahl n1 um ihre Längsachse 11 rotiert. In den Fig. 1 bis 6 sind unterschiedliche Kugelfräser 12 mit unterschiedlichen Querschnitten an der Frässpindel 10 angeordnet. In den Fig. 1, 2, 4, 5 und 6 ist die Frässpindel 10 in Richtung der Werkzeugspindel 7 angeordnet. Gemäß der Fig. 3 ist das Drehwerkzeug 9, welches zwei Drehmeißel 13 aufweist, in Richtung der Werkstückspindel 7 angeordnet.

Der Werkstückhalter 5 ist in Richtung x1 auf der Basiseinheit 2 verschiebbar angeordnet. Darüber hinaus ist das Drehwerkzeug 9 auf dem Werkzeughalter 3 in x2-Richtung verschiebbar gelagert.

Im zweiten Arbeitsbereich A2 ist das Magazin 4 für die Werkstückhalter 5 angeordnet. Das Magazin 4 ist um eine dritte Achse B3 drehbar gelagert. Darüber hinaus ist das Magazin 4 in Richtung z1 linear verschiebbar.

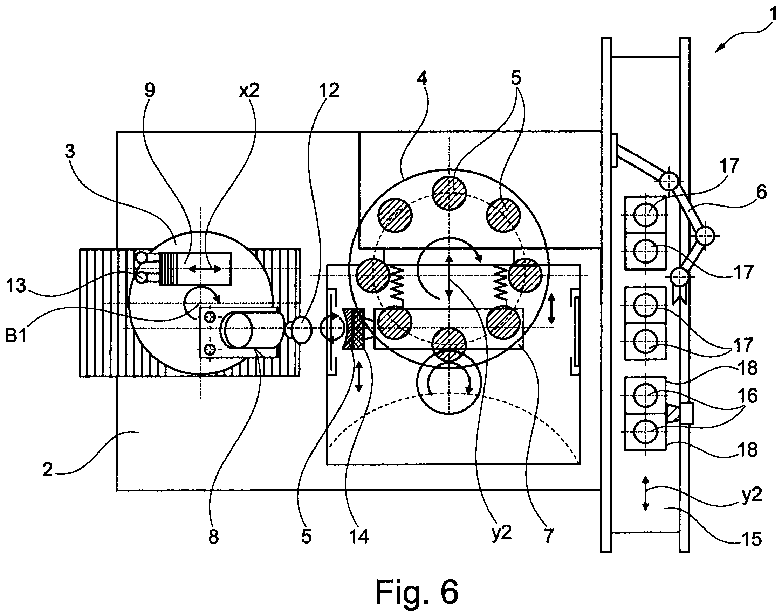

Die Werkstückhalter 5 können mittels einer an der Werkstückspindel 7 angeordneten Aufnahme 14 aus dem Magazin 4 entnommen und an der Werkstückspindel 7 befestigt werden. Die Werkstückaufnahme 14 ist in den Fig. 5 und 6 schematisch dargestellt. In den Fig. 5 und 6 ist ein Werkstückhalter 5 an der Aufnahme 14 angeordnet.

Im dritten Arbeitsbereich A3 ist eine Lade- und Entladevorrichtung 6 vorgesehen. Die Lade- und Entladevorrichtung 6 ist als Roboter oder als Cobot ausgebildet. Die Lade- und Entladevorrichtung 6 entnimmt einer Transportvorrichtung 15, die in Richtung y2 beweglich ausgebildet ist, Brillenglasrohlinge 16. Nach der Bearbeitung der Brillenglasrohlinge 16 legt die Lade- und Entladevorrichtung 6 die aus den Brillenglasrohlingen hergestellten Brillengläser 17 in der Transportvorrichtung 15 ab.

Die Brillengläser 17 können noch einer weiteren Bearbeitung zugeführt werden. Die Brillengläser 17 sind nach der Bearbeitung in der Vorrichtung 1 nicht zwingend fertiggestellt.

Die Transportvorrichtung 15 weist Transportkästen 18 auf. Diese müssen nicht zwingend vorgesehen sein.

Die Werkstückspindel 7 ist in Richtung y2 linear verschiebbar.

Damit ein nicht dargestellter Antrieb der Werkstückspindel 7 und eine nicht dargestellte Lagerung der Werkstückspindel 7 vor Schmutz und Flüssigkeit und Spänen geschützt sind, ist ein Faltenbalg 19 vorgesehen. Die Vorrichtung 1 weist ein Grundgestell 20 sowie ein Gehäuse 25 auf.

Der Werkzeughalter 3 ist auf einem linear beweglichen Schlitten 21 in Richtung x1 beweglich gelagert. Der Werkzeughalter 3 ist um die B1-Achse von 0 bis 360 Grad drehbar gelagert und ist über eine motorische Verstellung positionierbar.

Auf dem Werkzeughalter 3, der beispielsweise als Rundtisch ausgebildet ist, sind zwei werkzeughaltende Vorrichtungen 22, 23 angeordnet. In der werkzeughaltenden Vorrichtung 22 ist eine drehbar gelagerte, schnelllaufende Frässpindel 10 angeordnet und an deren unteren Seite ist ein Fräswerkzeug 12, im vorliegenden Fall ein Kugelfräser angeordnet, welches vorteilhaft mit zwei bis 15 Frässchneiden besetzt ist. Auf der anderen Seite um 180 Grad versetzt und parallel zur Frässpindel 10 ist in einer vorteilhaft waagerechten Position ein linear bewegliches Drehwerkzeug 9 angeordnet, welches vorteilhaft als Fast-Tool ausgebildet ist. Auf dem Drehwerkzeug 9 sind zwei Drehmeißel 13 angeordnet. Dieses sogenannte Linear-Fast-Tool kann mit einer oder auch zwei Drehwerkzeugen ausgebildet werden. Diese Werkzeuge sind im ersten Arbeitsbereich A1 angeordnet.

Im zweiten Arbeitsbereich A2 ist eine B2-Achse vorgesehen, die um 90 Grad zur ersten B1-Achse verdreht angeordnet ist. Diese B2-Achse ist ebenfalls um 0 bis 360 Grad drehbar und über ein Motorsystem (nicht dargestellt) angetrieben. Diese Achse ist positionierbar. An dieser Achse B2 ist mittig eine drehbar gelagerte Werkstückspindel 7 angeordnet. Diese Achse B2 ist mit der Linearachse y1 über einen Halter 24 verbunden. Sie kann sich in Bezug auf die Basiseinheit 2 waagerecht hin- und herbewegen. Sie kann sich entlang der y1-Achse motorisch bewegen und positionieren.

In dem zweiten Arbeitsbereich A2 ist oberhalb der Basiseinheit 2 eine weitere motorische Achse B3, die ebenfalls um 0 bis 360 Grad dreh- und positionierbar ist, vorgesehen. Diese Achse B3 ist senkrecht verstellbar in Richtung z1. Bei dem in den Fig. 1 bis 6 dargestellten Aufbau handelt es sich um eine senkrechte Verstellung. Diese Ausrichtung ist jedoch nicht zwingend.

In der Achse B3 ist das Magazin 4 angeordnet. Das Magazin 4 kann vier bis zwölf Werkstückhalter 5 oder auch eine andere Anzahl von Werkstückhaltern aufnehmen. Das Magazin 4 ist für unterschiedlich ausgebildete Werkstückhalter 5 für verschiedene Brillenglasrohlingtypen ausgelegt.

Im dritten Arbeitsbereich A3 ist eine Lade- und Entladevorrichtung 6 angeordnet, die in Richtung y2 positioniert werden kann. Auf der Transportvorrichtung 15 sind Transportkästen 18 angeordnet, die Brillenglasrohlinge 16 zuführen und fertig bearbeitete Brillengläser 17 abtransportieren. Die Vorrichtung 1 weist einen Roboter oder einen Cobot auf. Der Roboter oder der Cobot nimmt einen Brillenglasrohling 16 von der Transportvorrichtung 15 auf oder legt einen bearbeiteten Brillenglasrohling, das heißt ein Brillenglas 17, in der Transportvorrichtung 15 ab.

Das Gehäuse 25 dient zum einen als Spritzschutz und erfüllt zum anderen Sicherheitsfunktionen.

Die Basiseinheit 2 kann aus Polymerbeton, Granit oder beispielsweise einem Grauguss bestehen, der mit Kernsand gefüllt ist. Die Basiseinheit 2 ist vorteilhaft schwingungsisoliert und mittels einer Modalanalyse optimiert. Das Grundgestell 20 ist mit der Basiseinheit 2 über eine Befestigungsvorrichtung 26 verbunden. Bei der Ausführungsform gemäß Fig. 5 ist kein Grundgestell 20 vorhanden, sondern lediglich die Basiseinheit 2. An der Basiseinheit 2 oder an dem Grundgestell 20 sind Füße 27 angeordnet.

In den Fig. 2, 3, 4 und 5 ist ein Auffangbehälter 32 für Flüssigkeit, die bei den Bearbeitungsvorgängen eingesetzt wird, und für die abgetragenen Späne vorgesehen. Der Auffangbehälter 32 weist einen Abfluss 33 auf.

Die Bearbeitung eines Brillenglasrohlings in der Vorrichtung 1 läuft folgendermaßen ab:
Im ersten Arbeitsbereich A1 ist in der Ausgangslage die Frässpindel 10 in Richtung der Werkstückspindel 7 ausgerichtet. Die Frässpindel 10 ist genau auf die Mitte der Werkstückspindel 7 positioniert.

Die Werkstückspindel 7 in dem vierten Arbeitsbereich A4 ist so positioniert, dass die leere Werkstückspindel 7 in Richtung des zweiten Arbeitsbereiches A2 zeigt. Die Werkstückspindel 7 zeigt mit der Aufnahme 14 in Richtung des Magazins 4. Die Lade- und Entladevorrichtung 6 steht senkrecht über dem Brillenglasrohling 16. Das Magazin 4 ist so positioniert, dass ein Werkstückhalter 5, der der konvexen Frontkurve des Brillenglasrohlings 16 entspricht, senkrecht über der Werkstückspindel 7 angeordnet ist.

Wenn ein Startbefehl ausgelöst wird, öffnet sich eine Ladeluke 28. Das Magazin 4, welches beispielsweise als runder Magazinteller ausgebildet ist, fährt entlang der z1-Achse nach unten und bringt einen Werkstückhalter 5 in eine Aufnahme 14 der Werkstückspindel 7. Der Werkstückhalter 5 wird an der Aufnahme 14 der Werkstückspindel 7 befestigt. Das Magazin 4 fährt entlang der y1-Achse in den Arbeitsbereich A2 zurück. Die Ladeluke 28 schließt sich. Anschließend dreht sich die Werkstückspindel 7 mit der Aufnahme 14 und dem Werkstückhalter 5 in Richtung des dritten Arbeitsbereiches A3. Nun öffnet sich eine Ladeluke 29. Die Lade- und Entladevorrichtung 6 greift mit einem Greifer oder Vakuumsauger 30 den Brillenglasrohling 16 und transportiert den Brillenglasrohling 16 mit der Konvexseite zum Werkstückhalter 5. Auf diesem Werkstückhalter 5 wird der Brillenglasrohling 16 auf dem Werkstückhalter 5 angeordnet. Der Werkstückhalter 5 kann als Vakuumhalter oder als Adhäsionshalter ausgebildet sein. Andere Befestigungsmöglichkeiten sind ebenfalls denkbar. Ist der Werkstückhalter 5 als Vakuumhalter ausgebildet, erfolgt ein Vakuumanschluss in der Werkstückspindel 7. Ist der Werkstückhalter 5 als Adhäsionshalter ausgebildet, ist ein Vakuumanschluss nicht notwendig.

Anschließend schließt sich die Ladeluke 29 und der Brillenglasrohling 16 wird durch Drehung der Werkstückspindel 7 um die Achse B2 in den Arbeitsbereich A1 gebracht. Nun beginnt der Fräsvorgang für die Grobbearbeitung des Brillenglasrohlings 16. Die erzeugte Oberfläche entspricht dem berechneten Freiformrezept. Eine mögliche Bearbeitung wird weiter unten beschrieben.

Die Bearbeitung erfolgt beispielsweise in einer Bewegung um die Werkstückspindelachse s1 vom Rand zur Mitte des Brillenglasrohlings 16. Es sind aber auch andere Kinematiken möglich.

Bei der Fräsbearbeitung interpolieren die Spindelachse s1, die Linearachse x1 sowie die Querachse y1.

Wenn dieser Arbeitsgang abgeschlossen ist, fährt der Werkzeughalter 3 in x1-Richtung von der Werkstückspindel 7 weg. Das Fräswerkzeug 8 befindet sich dann außerhalb eines Spritzschutzgehäuses 31.

Sobald das Fräswerkzeug 8 außerhalb des Spritzschutzgehäuses 31 angeordnet ist, dreht sich der Werkzeughalter 3 um die Achse B1 um 180 Grad und positioniert den Drehmeißel 13, oder auch als Schneide bezeichnet, des Drehwerkzeuges 9 (auch Fast-Tool genannt) in Richtung der Werkstückspindel 7. Nach der Positionierung des Drehwerkzeuges 9 beginnt die Feinbearbeitung des Brillenglasrohlings 16 über einen Drehprozess, der in Form einer Spezialbahn, beispielsweise vom Rand der Linsenkontur bis zur Mitte der Linse durchgeführt wird. Da die Oberfläche des Brillenglases eine nicht rotationsförmige Freiformfläche ist, muss bei jeder Umdrehung des Brillenglasrohlings 16 sich das Drehwerkzeug 9 entlang der x2-Achse bewegen und erzeugt einen Teil der Freiformfläche. Gleichzeitig interpolieren die Achsen s1, x1 und y1. Durch die Interpolation wird die hauptsächliche x-Bewegung zur Erzeugung der Freiformfläche erzeugt. Es sind jedoch auch andere Bewegungen oder Interpolationen möglich, um Bearbeitungseigenschaften zu optimieren.

Die Kombination der B2-Achsenpositionierung in Verbindung mit der x1-Positionierung wird vorteilhaft eingesetzt, um das Drehwerkzeug 9 mit dem Drehmeißel 13 perfekt auf die Mitte der Werkstückspindel 7 zu positionieren. Hierdurch wird die Qualität in der Mitte des Brillenglases 17 optimiert.

Wenn der Drehprozess abgeschlossen ist, fährt das Drehwerkzeug 9 über die Linearachsen x1 und x2 in eine Grundstellung. Danach dreht sich die Werkstückspindel 7 um die Achse B2 in Richtung des dritten Arbeitsbereiches A3.

Hier erfolgt das Entladen des Brillenglases 17 über die Lade- und Entladevorrichtung 6. Anschließend dreht sich die Werkstückspindel 7 um die Achse B2 in Richtung des zweiten Arbeitsbereiches A2. Der Werkstückhalter 5 kann nunmehr in dem Magazin 4 wieder abgelegt werden und der Ablauf für den nächsten Brillenglasrohling 16 beginnt erneut.

Weist der nächste Brillenglasrohling dieselbe Frontkurve auf wie der vorhergehende Brillenglasrohling 16, ist ein Wechsel des Werkstückhalters 5 nicht erforderlich.

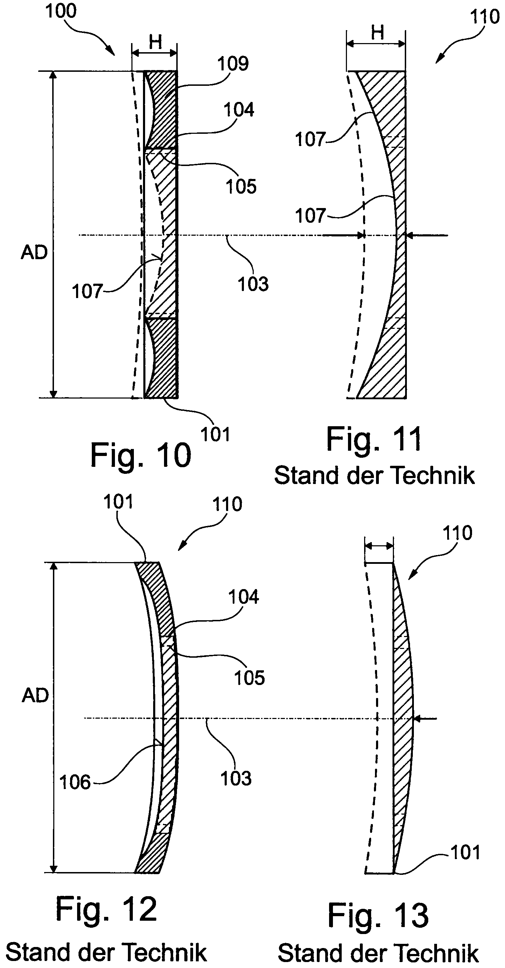

Mit der erfindungsgemäßen Vorrichtung 1 kann die Bearbeitung des Brillenglasrohlings, wie aus der Praxis bekannt, durchgeführt werden. Im ersten Arbeitsgang, dem Grobbearbeiten des Brillenglasrohlings 16, wird mittels des Fräswerkzeuges 8 das gesamte überflüssige Material des Brillenglasrohlings 16 zu der späteren Brillenglasfläche 107 (Fig. 11), welche beispielsweise eine Freiformfläche ist, abgefräst. Dies erfolgt mit einem gleichmäßigen Aufmaß auf der gesamten Fläche von circa 0,2 mm bis 0,3 mm zur finalen Fertigungsdicke. Ebenfalls wird mit dem gleichen Fräswerkzeug 8 der Durchmesser des Werkstückes, das heißt des Brillenglasrohlings 16, auf einen vorgegebenen Wert reduziert. Besonders bei Plusgläsern, das sind Brillengläser, die eine Vergrößerungswirkung haben, wird der Außendurchmesser auf eine elliptische Form gebracht, die eine Art Best-Fit zum Brillenglas 17 darstellt. Das ist erforderlich, um die Dicke eines Brillenglases, und damit auch das Gewicht des Brillenglases zu optimieren. Im Ergebnis erhält man dadurch Brillengläser mit sehr unterschiedlichen Außenformen. Dies führt wiederum zu einem sehr großen Bedarf an unterschiedlichen Aufnahmeringen bei einem nachgelagerten Bedampfungsprozess. Universalhalter bei der Beschichtung von Brillengläsern haben den Nachteil, dass im Beschichtungsprozess zuerst eine Seite des Brillenglases und dann in einem zweiten Durchgang die zweite Seite des Brillenglases 17 beschichtet wird. Das finale Beschichtungsmaterial, das heute bei fast allen Brillengläsern eingesetzt wird, nämlich die sogenannten hydrophoben Schichten oder Schichten mit einem Lotuseffekt, lagert sich an dem Universalhaltering vorbei auf der noch unbeschichteten Rückseite ab. Das führt dazu, dass beim Beschichten der zweiten Seite das Beschichtungsmaterial, was für die Entspiegelung aufgebracht wird, sich nicht fest mit dem Brillenglas 17 verbindet und es zu Schichtablösungen kommt. Um das zu vermeiden, werden spezielle Ringhalter eingesetzt.

Hierzu sind jedoch eine große Anzahl an Beschichtungsringen notwendig, wenn man den Linsendurchmesser zu späteren finalen Fassungsformen optimiert (Best-Fit-Form).

Nachdem der erste Arbeitsgang, das Vorfräsen und die Randbearbeitung, abgeschlossen ist, wird in einem zweiten Arbeitsgang über einen weiteren Fräs- oder Drehprozess die Feinbearbeitung der Brillengläser 17 durchgeführt. Bei diesem Arbeitsgang wird dann das Aufmaß von 0,2 mm bis 0,3 mm abgetragen. Der Abtragungsprozess erfolgt mit dem Drehwerkzeug 9.

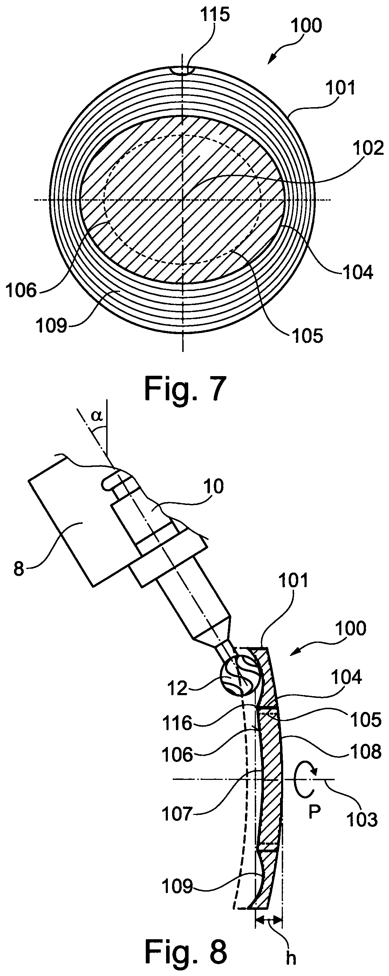

Besonders vorteilhaft erfolgt eine Bearbeitung eines Brillenglasrohlings 16 in der in den Fig. 7 bis 9, Fig. 10 und Fig. 14 gezeigten Art und Weise.

Fig. 7 zeigt einen Brillenglasrohling 100, der einen äußeren Rand 101 aufweist. Der Brillenglasrohling weist darüber hinaus eine Mitte 102 auf.

An dem Brillenglasrohling 100 kann eine Markierung 115 angeordnet werden, die beispielsweise als Ausrichtungsmarkierung ausgebildet ist.

Gemäß Fig. 8 wird der Brillenglasrohling 100 einer Grobbearbeitung unterzogen, und zwar mit dem Fräswerkzeug 8, welches den Kugelfräser 12 aufweist. Die Drehzahl des Fräswerkzeuges weist vorteilhaft eine Drehzahl zwischen 50.000 und 80.000 Umdrehungen pro Minute auf. Dabei wird die schnelllaufende Frässpindel 10 eingesetzt. Die Frässpindel 10 ist in einem Winkel α relativ zur Linsenachse 103 angeordnet. Die Linsenachse 103 verläuft durch die Mitte 102.

Der Fräsvorgang läuft so ab, dass zuerst der äußere Rand 101 des Brillenglasrohlings 100 auf einen Standarddurchmesser abgefräst wird. Der Standarddurchmesser kann beispielsweise 72,5 mm betragen.

Anschließend wird in einer kreisförmigen Spirale, die in eine elliptische Spiralbahn übergeht und die dem inneren Bereich 114 entspricht, der auch als Best-Fit-Form bezeichnet werden kann, das gesamte überstehende Material des Brillenglasrohlings 100 so abgefräst, dass der äußere Rand 101 bestehen bleibt und eine minimale Dicke, beispielsweise von vorzugsweise circa 0,2 mm bis 0,3 mm behält. Innerhalb des Übergangsbereiches vom äußeren Rand 101 zur Ellipse des inneren Bereiches 114 wird die Frästiefe so ausgebildet, dass sie unterhalb der Höhe entlang einer Kante 116 liegt. Diese Höhe beträgt vorteilhaft 0,2 mm bis 0,3 mm unter der Fertighöhe. Sie kann aber auch eine andere Höhe aufweisen.

Eine Kante 116 ist an der Konturlinie 104 ausgebildet. Dieser Fräsvorgang ist in Fig. 8 mit dem Kugelfräser 12 dargestellt. Die Höhe ist in Fig. 8 mit h bezeichnet.

Eine Konturlinie 105 bezeichnet den Rand des fertigen Brillenglases. Wie schon ausgeführt, bezeichnet der innere Bereich 114 beispielsweise eine Best-Fit-Form. In diesem Arbeitsvorgang entsteht eine freistehende Ellipse 106. Mit Beginn einer Konturlinie 104 wird die Dicke der Brillenglasfläche 107 so bearbeitet, dass in diesem Bereich ein Aufmaß von beispielsweise 0,2 mm bis 0,3 mm über der finalen Brillenglasdicke entsteht. Diese Brillenglasfläche 107 ist beispielsweise eine sogenannte Best-Fit-Fläche. Diese Brillenglasfläche 107 ist beispielsweise eine Freiformfläche.

Dadurch wird eine Höhentopografie der Fläche, die vom äußeren Rand 101 bis zu der Konturlinie 104 nicht der finalen Topografie des fertigen Brillenglases entspricht, sondern einer tiefer liegenden Fläche und ab der Konturlinie 104 der späteren Brillenglasfläche 107 mit einem Dickenaufmaß von beispielsweise 0,2 mm bis 0,3 mm entspricht, hergestellt. Es entsteht hierdurch eine freistehende Ellipsenfläche in Form einer Insel auf der Brillenglasfläche 107. Diese Ellipsenfläche kann auch als Best-Fit-Fläche bezeichnet werden.

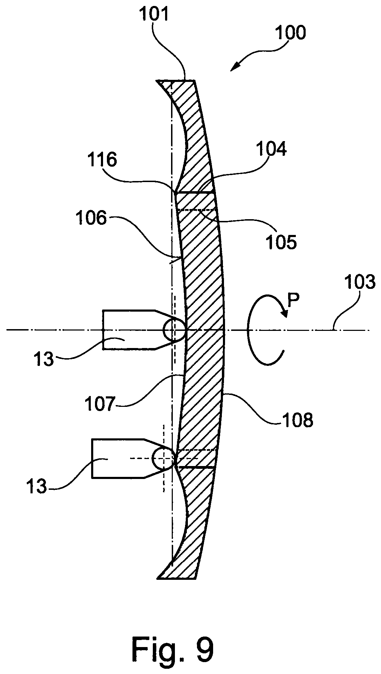

In Fig. 9 ist der zweite Arbeitsgang mit dem Drehwerkzeug 9 (Drehwerkzeug ist in Fig. 9 nicht dargestellt) mit den Drehmeißeln 13 dargestellt. In diesem zweiten Arbeitsgang erfolgt die Feinbearbeitung. Bei der Feinbearbeitung wird das Aufmaß von beispielsweise 0,2 mm bis 0,3 mm, beginnend ab der Konturlinie 104, abgetragen. Da die Oberfläche des fertigen Brillenglases 17 deutlich weniger ist als die Fläche des Gesamtbrillenglases entlang des äußeren Randes 101, wird die Bearbeitungszeit deutlich reduziert, da weniger Umdrehungen für die Bearbeitung notwendig sind. Darüber hinaus wird auch der Werkzeugverschleiß der Drehmeißel 13 kleiner, da weniger Drehweg vorhanden ist.

Der technologische Vorteil kann bis zu 50 % betragen. Typischerweise beträgt ein Durchmesser eines Brillenglases circa 55 mm, was bedeutet, dass beispielsweise nur circa 920 Umdrehungen bei einer Planfläche notwendig sind, um die Ellipse 106 zu bearbeiten.

Da der Drehweg der Spirale mit kleinerem Durchmesser deutlich abnimmt, ist die Auswirkung auf Arbeitszeit und Verschleiß überproportional zur Einsparung der Anzahl der Umdrehungen, die reduziert werden.

Bei dem aus der Praxis bekannten Verfahren wird mit dem Drehwerkzeug die gesamte Fläche des Brillenglasrohlings 100 von dem äußeren Rand 101 beginnend bis zur Mitte 102 des Brillenglasrohlings bearbeitet. Hierbei ist gegenüber der Erfindung eine deutlich höhere Anzahl von Umdrehungen notwendig, zum Beispiel 1.100 Umdrehungen bei einem überproportional längerem Drehweg.

Ein weiterer Vorteil der erfindungsgemäßen Bearbeitung des Brillenglasrohlings liegt darin, dass die Rohdicke für einen Brillenglasrohling 100 um circa 50 % reduziert werden kann, da die Randdicke des Brillenglases entlang der Konturlinie 105 deutlich niedriger ist als an dem äußeren Rand 101 des Brillenglases.

Dies bezieht sich im vorliegenden Fall auf Minusgläser.

Bei Plusgläsern ist es umgekehrt. Hier reduziert sich die notwendige Mittendicke des Brillenglasrohlings 100.

Eine Frontoberfläche 108 wird im vorliegenden Ausführungsbeispiel nicht bearbeitet.

Während der Fräsbearbeitung und der Bearbeitung mit dem Drehwerkzeug mit den Drehmeißeln 13 rotiert der Brillenglasrohling 100 um die Linsenachse 103 gemäß dem Pfeil P.

Dadurch, dass der Randbereich 109 nicht mit dem Drehwerkzeug bearbeitet werden muss, erhält man eine erhebliche Zeitersparnis bei der Bearbeitung sowie eine erhebliche Verbesserung der Standzeit des Diamantwerkzeuges für die Feinbearbeitung.

Fig. 10 zeigt den Brillenglasrohling 100, bei dem der Randbereich 109 durch das Fräswerkzeug 8 bearbeitet ist. Die Höhe H ist geringer als bei einem zum Stand der Technik gehörenden Brillenglasrohling 110 gemäß Fig. 11, bei dem die gesamte Brillenglasfläche 107 mit einem Drehwerkzeug bearbeitet werden muss.

Die Fig. 12 und 13 zeigen ein Plusglas mit einem zum Stand der Technik gehörenden Brillenglasrohling 110. In Fig. 12 ist der Brillenglasrohling 110 vor der Bearbeitung gezeigt. Gemäß Fig. 13 ist der Brillenglasrohling 110 bearbeitet und der äußere Rand 101 ist sehr dünn ausgebildet. Dies wird auch als randscharf bezeichnet. Bei diesem zum Stand der Technik gehörenden Brillenglasrohling 110 gibt es Probleme, das Brillenglas in einen Werkstückhalter zur weiteren Bearbeitung einzusetzen, ohne dass es beschädigt wird.

Gemäß Fig. 13 ist ein Brillenglasrohling 100 dargestellt, der den Randbereich 109 aufweist. In Fig. 13 ist mit gestrichelten Linien ein Rohteil 111 dargestellt. Aus diesem Rohteil 111 wird mittels des Fräswerkzeuges 8 mit dem Fräskopf 12 das Brillenglas hergestellt. Die Konturlinie 105 gibt die Breite des fertigen Brillenglases an. Die Konturlinie 104 gibt die sogenannte Best-Fit-Form des Brillenglases an.

Der Brillenglasrohling 100 weist einen Außendurchmesser AD auf, der beispielsweise 72,5 mm aufweist.

Innerhalb der Konturlinie 105 wird das finale Brillenglas 112 ausgebildet.

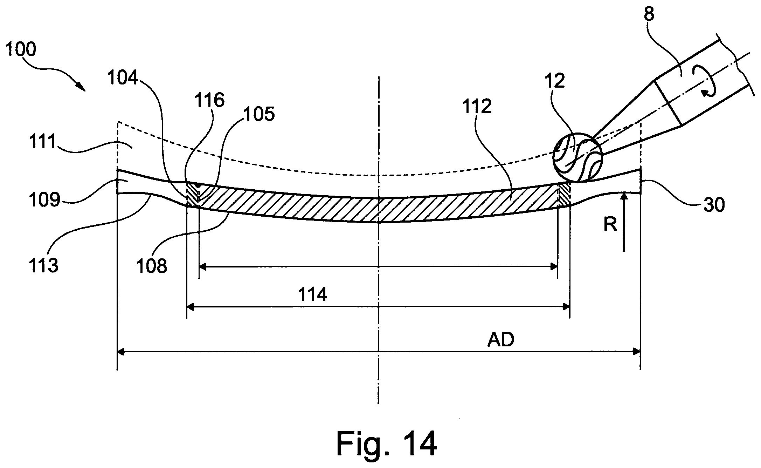

In Fig. 14 ist der Randbereich 109 derart ausgebildet, dass in der Frontoberfläche im Randbereich 109 ein Radius R ausgebildet ist. Dieser Radius kann beispielsweise 7,5 mm betragen. Es besteht aber auch die Möglichkeit, den Radius größer oder kleiner auszubilden.

Der Radius erzeugt eine Verstärkung in dem Randbereich 109 bei der Ausbildung eines Plusglases. Man erhält durch diesen negativen Radius R eine Einbuchtung 113. Die Einbuchtung 113 ist in der Frontoberfläche 108 des Brillenglasrohlings 100 angeordnet. Durch diese Ausführungsform wird der Randbereich 109 verstärkt und man erhält einen Führungsrand im Gegensatz zu der Ausführungsform gemäß Fig. 13.

Diese Ausführungsformen weisen den Vorteil auf, dass die Plusgläser einen Führungsrand aufweisen und damit leichter handhabbar sind und nicht so schnell beschädigt werden. Bei Minusgläsern können, wie in den Fig. 10 und 11 dargestellt, dünnere Rohteile (Blanks) mit einer geringeren Höhe H verwendet werden.

### Bezugszahlen

- 1: Vorrichtung
- 2: Basiseinheit
- 3: Werkzeughalter
- 4: Magazin
- 5: Werkstückhalter
- 6: Lade- und Entladevorrichtung
- 7: Werkstückspindel
- 8: Fräswerkzeug
- 9: Drehwerkzeug
- 10: Frässpindel
- 11: Längsachse der Frässpindel
- 12: Kugelfräser
- 13: Drehmeißel
- 14: Aufnahme
- 15: Transportvorrichtung
- 16: Brillenglasrohlinge
- 17: Brillenglas
- 18: Transportkasten
- 19: Faltenbalg
- 20: Grundgestell
- 21: Schlitten
- 22: werkzeughaltende Vorrichtung
- 23: werkzeughaltende Vorrichtung
- 24: Halter
- 25: Gehäuse
- 26: Befestigungsvorrichtung
- 27: Füße
- 28: Ladeluke
- 29: Ladeluke
- 30: Greifer/Vakuumsauger
- 31: Spritzschutzgehäuse
- 32: Auffangbehälter
- 33: Abfluss
- 100: Brillenglasrohling
- 101: äußerer Rand
- 102: Mitte
- 103: Linsenachse
- 104: Konturlinie innerer Bereich
- 105: Konturlinie fertiges Brillenglas
- 106: Ellipse
- 107: Brillenglasfläche
- 108: Frontoberfläche
- 109: Randbereich
- 110: Brillenglasrohling
- 111: Rohteil
- 112: finales Brillenglas
- 113: Einbuchtung
- 114: innerer Bereich
- 115: Markierung
- 116: Kante an Konturlinie 104
- A1: Arbeitsbereich Werkzeughalter
- A2: Arbeitsbereich Magazin
- A3: Arbeitsbereich Ladevorrichtung
- A4: Arbeitsbereich Spindel
- AD: Außendurchmesser
- B1: erste Achse (Werkzeughalter)
- B2: zweite Achse (Werkstückspindel)
- B3: dritte Achse (Magazin)
- h: Höhe
- H: Höhe Rohling
- n1: Drehzahl Frässpindel
- P: Pfeil
- R: Radius
- s1: Werkstückspindelachse
- x1: Richtung
- x2: Richtung
- y2: Richtung
- y1: Richtung
- z1: Richtung
- α: Winkel

## Patentansprüche

1. Vorrichtung zur Bearbeitung von Brillenglasrohlingen mit wenigstens zwei Werkzeugen für die Bearbeitung der Brillenglasrohlinge, wobei die Vorrichtung mehrere Arbeitsbereiche aufweist, wobei in einem Arbeitsbereich eine Ladevorrichtung für die Brillenglasrohlinge und eine Entladevorrichtung für die aus den Brillenglasrohlingen hergestellten Brillengläser angeordnet ist,
**dadurch gekennzeichnet,**
- **dass** in einem ersten Arbeitsbereich (A1) ein um eine erste Achse (B1) drehbarer Werkzeughalter (3) mit wenigstens zwei werkzeughaltenden Vorrichtungen (22, 23) für die Werkzeuge (8, 9) angeordnet ist,
- **dass** in einem zweiten Arbeitsbereich (A2) ein Magazin (4) für wenigstens zwei Werkstückhalter (5) vorgesehen ist,
- **dass** in einem dritten Arbeitsbereich (A3) die Lade- und Entladevorrichtung (6) angeordnet ist, und
- **dass** ein vierter Arbeitsbereich (A4) vorgesehen ist, in dem eine Werkstückspindel (7) mit einer Aufnahme (14) für einen Werkstückhalter (5) angeordnet ist, wobei die Werkstückspindel (7) um eine zweite Achse (B2) positionierbar ausgebildet ist.

2. Vorrichtung nach Anspruch 1, **dadurch gekennzeichnet, dass** die erste Achse (B1) und die zweite Achse (B2) senkrecht zueinander ausgerichtet sind.

3. Vorrichtung nach Anspruch 1 oder 2, **dadurch gekennzeichnet, dass** die Werkstückspindel (7) in Richtung des ersten oder des zweiten oder des dritten Arbeitsbereiches (A1, A2, A3) um die zweite Achse (B2) positionierbar ausgebildet ist.

4. Vorrichtung nach einem der vorhergehenden Ansprüche, **dadurch gekennzeichnet, dass** die Werkstückspindel (7) zusätzlich um eine Spindelachse (s1) rotatorisch angetrieben ausgebildet ist.

5. Vorrichtung nach einem der vorhergehenden Ansprüche, **dadurch gekennzeichnet, dass** der erste und der zweite und der dritte Arbeitsbereich (A1, A2, A3) radial zur zweiten Achse (B2) der Werkstückspindel angeordnet sind.

6. Vorrichtung nach einem der vorhergehenden Ansprüche, **dadurch gekennzeichnet, dass** in den werkzeughaltenden Vorrichtungen (22, 23) ein Fräswerkzeug (8) und ein wenigstens einen Drehmeißel (13) aufweisendes Drehwerkzeug (9) zur Bearbeitung einer Brillenglasfläche (107) der Brillenglasrohlinge (16) angeordnet ist.

7. Vorrichtung nach Anspruch 6, **dadurch gekennzeichnet, dass** in dem ersten Arbeitsbereich (A1) das Fräswerkzeug (8) mit einem um eine Frässpindel (10) drehbaren und zustellbaren Kugelfräser (12) anordbar ist, oder dass in dem ersten Arbeitsbereich (A1) das den wenigstens einen Drehmeißel (13) aufweisende Drehwerkzeug (9) anordbar ist.

8. Vorrichtung nach einem der vorhergehenden Ansprüche, **dadurch gekennzeichnet, dass** in dem dritten Arbeitsbereich (A3) die Ladevorrichtung (6) zum Laden der Brillenglasrohlinge (16) und die Entladevorrichtung (6) zum Entladen der aus den bearbeiteten Brillenglasrohlingen (16) hergestellten Brillengläser (17) angeordnet ist, und dass die Ladevorrichtung und die Entladevorrichtung eine einzige Vorrichtung (6) ist.

9. Vorrichtung nach einem der vorhergehenden Ansprüche, **dadurch gekennzeichnet, dass** der in dem ersten Arbeitsbereich (A1) angeordnete um eine erste Achse (B1) drehbare Werkzeughalter (3) linear verschiebbar ausgebildet ist.

10. Vorrichtung nach einem der vorhergehenden Ansprüche, **dadurch gekennzeichnet, dass** die Werkstückspindel (7) mit der Aufnahme (14) für den Werkstückhalter (5) senkrecht zu ihrer Längsachse und in Richtung der zweiten Achse (B2) linear verschiebbar ausgebildet ist.

11. Verfahren zur Bearbeitung von Brillenglasrohlingen mit einer Vorrichtung nach einem der vorhergehenden Ansprüche, wobei mindestens zwei Brillenglasrohlingtypen mit unterschiedlichen aufnahmeseitigen Oberflächenkrümmungen auswählbar sind,
**dadurch gekennzeichnet,**
- **dass** die Werkstückspindel (7) mit der Aufnahme (14) für den Werkstückhalter (5) im zweiten Arbeitsbereich (A2) positioniert wird,
- **dass** in dem zweiten Arbeitsbereich (A2) ein zu einem Brillenglasrohling (16) passender Werkstückhalter (5) aus dem Magazin (4) an der Aufnahme (14) der Werkstückspindel (7) angeordnet wird,
- **dass** die Werkstückspindel (7) mit der Aufnahme (14) für den Werkstückhalter (5) und dem an der Aufnahme (14) angeordneten Werkstückhalter (5) in dem dritten Arbeitsbereich (A3) positioniert wird,
- **dass** ein Brillenglasrohling (16) im dritten Arbeitsbereich (A3) mit der Ladevorrichtung (6) einer Transportvorrichtung (15) entnommen und in oder an dem Werkstückhalter (5) angeordnet und fixiert wird,
- **dass** die Werkstückspindel (7) mit der Aufnahme (14) für den Werkstückhalter (5) und dem daran angeordneten Werkstückhalter (5) und dem in oder an dem Werkstückhalter (5) angeordneten Brillenglasrohling (16) in dem ersten Arbeitsbereich (A1) positioniert wird,
- **dass** der Werkzeughalter (3) das erste Werkzeug (8) in Richtung der Werkstückspindel (7) ausrichtet,
- **dass** der Brillenglasrohling (16) mit dem ersten Werkzeug (8) bearbeitet wird,
- **dass** der Werkzeughalter (3) das zweite Werkzeug (9) in Richtung der Werkstückspindel (7) ausrichtet,
- **dass** der Brillenglasrohling (16) mit dem zweiten Werkzeug (9) bearbeitet wird,
- **dass** der Werkstückhalter (5) und das in oder an dem Werkstückhalter (5) angeordnete aus dem bearbeiteten Brillenglasrohling (16) hergestellte Brillenglas (17) mit der Werkstückspindel (7) in dem dritten Arbeitsbereich (A3) positioniert wird,
- **dass** das aus dem bearbeiteten Brillenglasrohling (16) hergestellte Brillenglas (17) mittels der Entladevorrichtung (6) dem Werkstückhalter (5) entnommen und in der Transportvorrichtung (15) abgelegt wird.

12. Verfahren nach Anspruch 11, **dadurch gekennzeichnet, dass** als letzter Schritt die Werkstückspindel (7) mit dem Werkstückhalter (5) in dem zweiten Arbeitsbereich (A2) positioniert wird und der Werkstückhalter (5) in dem Magazin (4) abgelegt wird.

13. Verfahren nach Anspruch 11 oder 12, **dadurch gekennzeichnet, dass** zwischen dem Bearbeiten des Brillenglasrohlings (16) mit dem ersten Werkzeug (8) und dem Bearbeiten mit dem zweiten Werkzeug (9) wenigstens eine weitere Bearbeitung mit wenigstens einem weiteren Werkzeug durchgeführt wird und/oder dass nach dem Bearbeiten mit dem zweiten Werkzeug wenigstens eine weitere Bearbeitung mit wenigstens einem weiteren abweichenden Werkzeug durchgeführt wird.

14. Verfahren nach einem der Ansprüche 11, 12 oder 13, **dadurch gekennzeichnet, dass** das erste Werkzeug (8) als ein Fräswerkzeug und das zweite oder ein weiteres Werkzeug (9) als ein den wenigstens einen Drehmeißel (13) aufweisendes Drehwerkzeug ausgebildet ist.

15. Verfahren nach einem der Ansprüche 11 bis 14, **dadurch gekennzeichnet, dass** bei der Fräsbearbeitung eine Spindelachse (s1) der Werkstückspindel (7), eine Linearachse (x1) des Werkzeughalters (3) und eine Querachse (y1) zu der Längsachse der Werkstückspindel (7) interpolieren.

16. Verfahren nach einem der Ansprüche 11 bis 15, **dadurch gekennzeichnet, dass** das wenigstens eine Werkzeug (8, 9) auf die Mitte der Werkstückspindel (7) ausgerichtet wird.

17. Verfahren nach Anspruch 16, **dadurch gekennzeichnet, dass** eine Kombination der Bewegung der Werkstückspindel (7) in Richtung der Querachse (y1) senkrecht zur Längsachse der Werkstückspindel (7) und der Bewegung des Drehwerkzeuges (9) in linearer Richtung (x1) durchgeführt wird für eine Ausrichtung des Drehwerkzeuges (9) auf die Mitte der Werkstückspindel (7).

## Geänderte Patentansprüche

### Geänderte Patentansprüche gemäss Regel 137(2) EPÜ.

1. Vorrichtung zur Bearbeitung von Brillenglasrohlingen mit wenigstens zwei Werkzeugen für die Bearbeitung der Brillenglasrohlinge, wobei die Vorrichtung mehrere Arbeitsbereiche aufweist, wobei in einem Arbeitsbereich eine Ladevorrichtung für die Brillenglasrohlinge und eine Entladevorrichtung für die aus den Brillenglasrohlingen hergestellten Brillengläser angeordnet ist,
- bei dem in einem ersten Arbeitsbereich (A1) ein um eine erste Achse (B1) drehbarer Werkzeughalter (3) mit wenigstens zwei werkzeughaltenden Vorrichtungen (22, 23) für die Werkzeuge (8, 9) angeordnet ist,
- wobei in einem dritten Arbeitsbereich (A3) die Lade- und Entladevorrichtung (6) angeordnet ist,
**dadurch gekennzeichnet ,**
- **dass** in einem zweiten Arbeitsbereich (A2) ein Magazin (4) für wenigstens zwei Werkstückhalter (5) vorgesehen ist,
- **dass** ein vierter Arbeitsbereich (A4) vorgesehen ist, in dem eine Werkstückspindel (7) mit einer Aufnahme (14) für einen Werkstückhalter (5) angeordnet ist, wobei die Werkstückspindel (7) um eine zweite Achse (B2) positionierbar ausgebildet ist,
- **dass** die Werkstückspindel (7) in Richtung des ersten oder des zweiten oder des dritten Arbeitsbereiches (A1, A2, A3) um die zweite Achse (B2) positionierbar ausgebildet ist.

2. Vorrichtung nach Anspruch 1, **dadurch gekennzeichnet, dass** die erste Achse (B1) und die zweite Achse (B2) senkrecht zueinander ausgerichtet sind.

3. Vorrichtung nach einem der vorhergehenden Ansprüche, **dadurch gekennzeichnet, dass** die Werkstückspindel (7) zusätzlich um eine Spindelachse (s1) rotatorisch angetrieben ausgebildet ist.

4. Vorrichtung nach einem der vorhergehenden Ansprüche, **dadurch gekennzeichnet, dass** der erste und der zweite und der dritte Arbeitsbereich (A1, A2, A3) radial zur zweiten Achse (B2) der Werkstückspindel angeordnet sind.

5. Vorrichtung nach einem der vorhergehenden Ansprüche, **dadurch gekennzeichnet, dass** in den werkzeughaltenden Vorrichtungen (22, 23) ein Fräswerkzeug (8) und ein wenigstens einen Drehmeißel (13) aufweisendes Drehwerkzeug (9) zur Bearbeitung einer Brillenglasfläche (107) der Brillenglasrohlinge (16) angeordnet ist.

6. Vorrichtung nach Anspruch 5, **dadurch gekennzeichnet, dass** in dem ersten Arbeitsbereich (A1) das Fräswerkzeug (8) mit einem um eine Frässpindel (10) drehbaren und zustellbaren Kugelfräser (12) anordbar ist, oder dass in dem ersten Arbeitsbereich (A1) das den wenigstens einen Drehmeißel (13) aufweisende Drehwerkzeug (9) anordbar ist.

7. Vorrichtung nach einem der vorhergehenden Ansprüche, **dadurch gekennzeichnet, dass** in dem dritten Arbeitsbereich (A3) die Ladevorrichtung (6) zum Laden der Brillenglasrohlinge (16) und die Entladevorrichtung (6) zum Entladen der aus den bearbeiteten Brillenglasrohlingen (16) hergestellten Brillengläser (17) angeordnet ist, und dass die Ladevorrichtung und die Entladevorrichtung eine einzige Vorrichtung (6) ist.

8. Vorrichtung nach einem der vorhergehenden Ansprüche, **dadurch gekennzeichnet, dass** der in dem ersten Arbeitsbereich (A1) angeordnete um eine erste Achse (B1) drehbare Werkzeughalter (3) linear verschiebbar ausgebildet ist.

9. Vorrichtung nach einem der vorhergehenden Ansprüche, **dadurch gekennzeichnet, dass** die Werkstückspindel (7) mit der Aufnahme (14) für den Werkstückhalter (5) senkrecht zu ihrer Längsachse und in Richtung der zweiten Achse (B2) linear verschiebbar ausgebildet ist.

10. Verfahren zur Bearbeitung von Brillenglasrohlingen mit einer Vorrichtung nach einem der vorhergehenden Ansprüche, wobei mindestens zwei Brillenglasrohlingtypen mit unterschiedlichen aufnahmeseitigen Oberflächenkrümmungen auswählbar sind,
- wobei die Werkstückspindel (7) mit der Aufnahme (14) für den Werkstückhalter (5) im zweiten Arbeitsbereich (A2) positioniert wird,
**dadurch gekennzeichnet ,**
- **dass** in dem zweiten Arbeitsbereich (A2) ein zu einem Brillenglasrohling (16) passender Werkstückhalter (5) aus dem Magazin (4) an der Aufnahme (14) der Werkstückspindel (7) angeordnet wird,
- **dass** die Werkstückspindel (7) mit der Aufnahme (14) für den Werkstückhalter (5) und dem an der Aufnahme (14) angeordneten Werkstückhalter (5) in dem dritten Arbeitsbereich (A3) positioniert wird,
- **dass** ein Brillenglasrohling (16) im dritten Arbeitsbereich (A3) mit der Ladevorrichtung (6) einer Transportvorrichtung (15) entnommen und in oder an dem Werkstückhalter (5) angeordnet und fixiert wird,
- **dass** die Werkstückspindel (7) mit der Aufnahme (14) für den Werkstückhalter (5) und dem daran angeordneten Werkstückhalter (5) und dem in oder an dem Werkstückhalter (5) angeordneten Brillenglasrohling (16) in dem ersten Arbeitsbereich (A1) positioniert wird,
- **dass** der Werkzeughalter (3) das erste Werkzeug (8) in Richtung der Werkstückspindel (7) ausrichtet,
- **dass** der Brillenglasrohling (16) mit dem ersten Werkzeug (8) bearbeitet wird,
- **dass** der Werkzeughalter (3) das zweite Werkzeug (9) in Richtung der Werkstückspindel (7) ausrichtet,
- **dass** der Brillenglasrohling (16) mit dem zweiten Werkzeug (9) bearbeitet wird,
- **dass** der Werkstückhalter (5) und das in oder an dem Werkstückhalter (5) angeordnete aus dem bearbeiteten Brillenglasrohling (16) hergestellte Brillenglas (17) mit der Werkstückspindel (7) in dem dritten Arbeitsbereich (A3) positioniert wird,
- **dass** das aus dem bearbeiteten Brillenglasrohling (16) hergestellte Brillenglas (17) mittels der Entladevorrichtung (6) dem Werkstückhalter (5) entnommen und in der Transportvorrichtung (15) abgelegt wird.

11. Verfahren nach Anspruch 10, **dadurch gekennzeichnet, dass** als letzter Schritt die Werkstückspindel (7) mit dem Werkstückhalter (5) in dem zweiten Arbeitsbereich (A2) positioniert wird und der Werkstückhalter (5) in dem Magazin (4) abgelegt wird.

12. Verfahren nach Anspruch 10 oder 11, **dadurch gekennzeichnet, dass** zwischen dem Bearbeiten des Brillenglasrohlings (16) mit dem ersten Werkzeug (8) und dem Bearbeiten mit dem zweiten Werkzeug (9) wenigstens eine weitere Bearbeitung mit wenigstens einem weiteren Werkzeug durchgeführt wird und/oder dass nach dem Bearbeiten mit dem zweiten Werkzeug wenigstens eine weitere Bearbeitung mit wenigstens einem weiteren abweichenden Werkzeug durchgeführt wird.

13. Verfahren nach einem der Ansprüche 10, 11 oder 12, **dadurch gekennzeichnet, dass** das erste Werkzeug (8) als ein Fräswerkzeug und das zweite oder ein weiteres Werkzeug (9) als ein den wenigstens einen Drehmeißel (13) aufweisendes Drehwerkzeug ausgebildet ist.

14. Verfahren nach einem der Ansprüche 10 bis 13, **dadurch gekennzeichnet, dass** bei der Fräsbearbeitung eine Spindelachse (s1) der Werkstückspindel (7), eine Linearachse (x1) des Werkzeughalters (3) und eine Querachse (y1) zu der Längsachse der Werkstückspindel (7) interpolieren.

15. Verfahren nach einem der Ansprüche 10 bis 14, **dadurch gekennzeichnet, dass** das wenigstens eine Werkzeug (8, 9) auf die Mitte der Werkstückspindel (7) ausgerichtet wird.

16. Verfahren nach Anspruch 15, **dadurch gekennzeichnet, dass** eine Kombination der Bewegung der Werkstückspindel (7) in Richtung der Querachse (y1) senkrecht zur Längsachse der Werkstückspindel (7) und der Bewegung des Drehwerkzeuges (9) in linearer Richtung (x1) durchgeführt wird für eine Ausrichtung des Drehwerkzeuges (9) auf die Mitte der Werkstückspindel (7).
